# NEUE EUROPÄISCHE PATENTSCHRIFT

(11) **EP 1 303 569 B2**
(45) Veröffentlichungstag und Bekanntmachung des Hinweises auf die Entscheidung über den Einspruch: **27.07.2011**
(45) Hinweis auf die Patenterteilung: 05.03.2008
(21) Anmeldenummer: 01969414.0
(22) Anmeldetag: 18.07.2001
(51) Int. Cl.: C08L 101/10

(54) **ALKOXYSILYLGRUPPENHALTIGE BINDEMITTEL UND BINDEMITTELZUSAMMENSETZUNGEN, VERFAHREN ZU DEREN HERSTELLUNG UND DEREN VERWENDUNG**
BINDING AGENTS AND BINDING AGENT COMPOSITIONS CONTAINING ALKOXY SILYL GROUPS, METHOD FOR THE PRODUCTION AND USE THEREOF
LIANTS ET COMPOSITIONS DE LIANTS CONTENANT DES GROUPES ALKOXYSILYLE, PROCEDE DE FABRICATION, ET UTILISATION DE CEUX-CI

(30) Priorität: 26.07.2000 DE 10036404
(43) Veröffentlichungstag der Anmeldung: 23.04.2003
(73) Patentinhaber: Henkel AG & Co. KGaA, 40589 Düsseldorf (DE)
(72) Erfinder: KLEIN, Johann, 40593 Düsseldorf (DE); HÜBNER, Wilfried, 40764 Langenfeld (DE); KOLENDA, Felicitas, 40789 Monheim (DE); KLAUCK, Wolfgang, 40670 Meerbusch (DE); SCHILLING, Gaby, 40227 Düsseldorf (DE)
(86) Internationale Anmeldenummer: PCT/EP2001/008278
(87) Internationale Veröffentlichungsnummer: WO 2002/008296

(56) Entgegenhaltungen:
- EP-A- 0 497 231
- EP-A- 0 994 117
- WO-A-95/16005
- WO-A-99/24517
- US-A- 4 567 107
- US-A- 4 937 284
- DATABASE WPI Section Ch, Week 199608 Derwent Publications Ltd., London, GB; Class A18, AN 1996-075145 XP002190732 & JP 07 331093 A (ASAHI GLASS CO LTD), 19. Dezember 1995 (1995-12-19)

## Beschreibung

Gegenstand der vorliegenden Erfindung ist ein Bindemittel, mindestens enthaltend ein mindestens zwei Alkoxysilylgruppen der allgemeinen Formel I

-Si(R₁)ₘ(OR₂)₃₋ₘ (I),

worin R₁ für einen linearen oder verzweigten Alkylrest mit 1 bis 6 C-Atomen, R₂ für einen linearen oder verzweigten Alkylrest mit 1 bis 6 C-Atomen und m für eine ganze Zahl von 0 bis 2 steht, tragendes Pfropfpolymeres, eine Bindemittelzusammensetzung, die mindestens ein Alkoxysilylgruppen tragendes Polymeres und mindestens ein weiteres Polymeres, das eine Alkoxysilylgruppe oder keine Alkoxysilylgruppe aufweist, oder ein Gemisch aus zwei oder mehr solcher Polymeren enthält, Verfahren zur Herstellung derartiger Bindemittel und Bindemittelzusammensetzungen sowie deren Verwendung.

Polymerschäume werden häufig zum Ausschäumen von Hohlräumen oder zur Abdichtung von Verbindungselementen eingesetzt. Üblicherweise werden zur Herstellung solcher Schäume Polyurethan-Präpolymere eingesetzt. Hauptsächliche Anwendungsgebiete sind das Bauwesen, aber auch technische Produkte, bei denen Hohlräume zur Vermeidung von Schwitznestern verfüllt werden müssen.

Präpolymere zur Erzeugung von Polyurethan-Schäumen besitzen zur Vernetzung befähigte Polyisocyanatgruppen, die mit einer Polyolkomponente oder Wasser unter Bildung des eigentlichen Polymeren reagieren. Die Schaumstruktur wird durch bei der Reaktion mit Wasser erzeugtes CO₂ oder in der Präpolymermischung vorhandenes Treibgas oder eine Kombination beider Elemente erzeugt.

Die in den Präpolymermischungen zur Erzeugung von Polyurethan-Schäumen vorhandenen Isocyanatgruppen sind hochreaktiv und wirken Lebewesen gegenüber ausgesprochen reizend und toxisch. Soweit derartige Abmischungen mit Treibgasen aus Aerosoldosen abgegeben werden, besteht, insbesondere bei unsachgemäßer Handhabung, die Gefahr der Aerosolbildung, so daß isocyanatgruppenhaltiges Material auf die Haut und in die Atemwege gelangen kann. Dies ist jedoch unerwünscht.

Die in Druckdosen zur Schaumerzeugung verwandten Präpolymerabmischungen auf Polyisocyanatbasis enthalten, neben relativ hochmolekularen Präpolymeren, zumeist auch nicht oder nur zu niedermolekularen Präpolymeren abreagierte Polyisocyanate. Diese Bestandteile der Präpolymerabmischungen bilden, wegen ihrer höheren Flüchtigkeit, das eigentliche Gefährdungspotential und sind deshalb unerwünscht. Neben diesem Gefährdungspotential, das bei sachgerechter Handhabung eher als niedrig einzustufen ist, besteht aber bei zahlreichen Anwendern ein Akzeptanzproblem, das durch die Deklarierungspflicht derartiger Produkte als toxisch und die Einstufung der entleerten Behälter als Sonderabfall noch gefördert wird. Dies gilt insbesondere für den Heimwerker, der sein Produkt in Baumärkten bezieht.

In der Vergangenheit wurden eine Reihe von Maßnahmen durchgeführt, um die Toxizität herkömmlicher verschäumbarer Präpolymerabmischungen auf Polyisocyanatbasis für Druckdosen herabzusetzen, insbesondere durch Auswahl bestimmter Polyisocyanate zur Herstellung der Präpolymeren und durch Herabsetzung des Anteils monomerer Bestandteile in den Präpolymermischungen. Insgesamt sind mit diesen Maßnahmen zwar Erfolge im Hinblick auf die Freisetzung von Isocyanaten erzielt worden, das Akzeptanzproblem wurde jedoch nur unzureichend gelöst, da derartige Abmischungen nach wie vor isocyanathaltig sind.

Aus dem Stand der Technik sind Verfahren bekannt, um Polymerschäume herzustellen, die im wesentlichen frei von Isocyanatgruppen sind. Derartige Polymerschäume können aus Aerosol- bzw. Druckdosen herkömmlicher Art, d.h. ohne daß die Anwendungstechnik verändert werden muß, ausgebracht werden. Die Handhabung derartiger Polymerschäume entspricht dabei im wesentlichen der Handhabung üblicher Polymerschäume auf Isocyanatbasis.

So beschreibt die WO-A 00/04069 eine Präpolymerabmischung mit silan-terminierten Präpolymeren. Die Präpolymerverbindung ist ein silanterminiertes Polyurethanpolymeres das mindestens zwei Alkoxysilylgruppen aufweist. Zur Herstellung derartiger Präpolymere werden zunächst isocyanatgruppenhaltige Polyurethanpräpolymere hergestellt, die anschließend terminal mit Alkoxysilanen umgesetzt werden, die mindestens eine gegenüber Isocyanaten reaktionsfähige Gruppe aufweisen. Der Gehalt des Präpolymeren an Silantermini beträgt mindestens 5 Gew.-%. Problematisch wirkt sich hierbei jedoch aus, daß bei einer derartigen Verringerung des Gehalts an Alkoxysilylgruppen in den beschriebenen Systemen üblicherweise die Materialeigenschaften des Schaums dahingehend leiden, daß der Schaum für viele Anwendungen zu weich und zu wenig reißfest ist.

Entsprechende Probleme treten beim Einsatz von Alkoxysilylgruppen tragenden Verbindungen als Bindemittel in Oberflächenbeschichtungsmitteln, beispielsweise in Lacken oder Klebstoffen auf.

Die JP 63-112605 A (Abstract) betrifft ein Harz mit guter Flexibilität, Widerstandsfähigkeit gegen Lösemittel und Adhäsion zu organischen Materialien. Das Harz läßt sich als Oberflächenbeschichtungen, Klebstoff, Dichtmittel oder Grundierung einsetzen. Ein entsprechendes Harz wird hergestellt durch radikalische Polymerisation von Verbindungen mit olefinisch ungesättigten Doppelbindungen, beispielsweise Styrol oder Methacrylaten und radikalisch polymerisierbaren oligomeren Verbindungen, die eine Silylgruppe tragen. Die oligomeren Verbindungen weisen dabei ein Molekulargewicht von 200 bis 60.000 auf. Die dabei entstehenden Verbindungen weisen ein durchgehendes C-C Polymerrückgrat auf, wobei als Seitenketten die im Rahmen der Polymerisation vorliegenden Oligomeren eingefügt sind. Ein Pfropfpolymeres, das radikalisch oder ionische gepfropfte Seitenketten aufweist, wird in der angegebenen Schrift nicht beschrieben.

Die EP-A 0 392 567 betrifft ebenfalls ein Harz mit guter Flexibilität, Widerstandsfähigkeit gegen Lösemittel und Adhäsion zu organischen Materialien. Das Harz läßt sich ebenfalls als Oberflächenbeschichtungen, Klebstoff, Dichtmittel oder Grundierung einsetzen. Die Druckschrift beschreibt auch Pfropfung als eines von vielen möglichen Herstellungsverfahren für die beschriebenen Polymeren. Die Druckschrift nennt jedoch keine Pfropfpolymeren, die mindestens einen Anteil von 0,5 Gew.-% an Pfropfästen aufweisen.

Die EP 0 994 117 A1 beschreibt feuchtigkeitshärtende Silan-Polymere zur Herstellung von Lacken, Kleb- und Dichtstoffen. Dabei werden Polyole mit mindestens vier Hydroxyendgruppen mit Isocyanatosilylharstoffen umgesetzt. Die Druckschrift beschreibt jedoch nicht den Einsatz von Pfropfpolymeren.

Die EP-A 0 427 293 beschreibt eine härtbare Zusammensetzung, die ein silylgruppenhaltiges Polymeres, eine organische Silylverbindung mit einem Molekulargewicht von weniger als 3000 und eine silanolgruppenhaltige Verbindung enthält. Als silylgruppenhaltige Polymere werden unter anderem Verbindungen beschrieben, die durch Copolymerisation von Makromonomeren mit niedermolekularen Vinylmonomeren erhältlich sind. Die Druckschrift nennt jedoch keine Pfropfpolymeren, die mindestens einen Anteil von 0,5 Gew.-% an Pfropfästen aufweisen.

Die WO 93/05089 beschreibt silylgruppenhaltige Polyurethanverbindungen. Eine Copolymerisation mit olefinisch ungesättigten Monomeren wird nicht beschrieben.

Die JP 04-103606 (CP 92-178115/22) betrifft reaktive, Si-Gruppen enthaltende Isobutylenpolymere. Die Polymeren enthalten Struktureinheiten mit Si-haltigen Seitenketten die durch Hydrosilylierung an das Hauptpolymere angepfropft wurden. Die Druckschrift nennt jedoch keine Pfropfpolymeren, die mindestens einen Anteil von 0,5 Gew-% an Pfropfästen aufweisen.

Die WO 99/24517 betrifft Zusammensetzungen für Oberflächenbeschichtungsmittel, die aus komplexen Mischungen aus teilweise silylgruppenterminierten Verbindungen, Vernetzer und einem Acrylatpfropfcopolymer mit ethylenisch ungesättigten Gruppen besteht

Demgemäß bestand eine Aufgabe der vorliegenden Erfindung darin alkoxysilylgruppenhaltige Bindemittel und Bindemittelzusammensetzungen zur Verfügung zu stellen, die trotz einer reduzierten Emission von Alkoholen bei der Aushärtung zu Oberflächenbeschichtungsmitteln mit guten Materialeigenschaften, beispielsweise zu Klebstoffen mit universellen adhäsiven Eigenschaften, das heißt, mit Adhäsion zu einer möglichst breiten Auswahl an unterschiedlichen Substraten, oder zu möglichst harten Schäumen mit einer hohen Bruchkraft führen. Insbesondere der letztgenannte Punkt ließ sich beim Einsatz silylierter Präpolymerer mit niedrigem Gehalt an Alkoxysilangruppen nicht erfüllen, da derartige Systeme bisher nur zu weichelastischen Produkten führten.

Gelöst wird die vorliegende Aufgabe durch Bindemittel und Bindemittelzusammensetzungen, wie sie im nachfolgenden Text beschrieben sind.

Gegenstand der vorliegenden Erfindung ist daher ein Bindemittel, mindestens enthaltend ein mindestens zwei Alkoxysilylgruppen der allgemeinen Formel I

-Si(R₁)ₘ(OR₂)₃₋ₘ (I),

worin R₁ für einen linearen oder verzweigten Alkylrest mit 1 bis 6 C-Atomen, R₂ für einen linearen oder verzweigten Alkylrest mit 1 bis 6 C-Atomen und m für eine ganze Zahl von 0 bis 2 steht, tragendes Pfropfpolymeres mit durch radikalische oder ionische Polymerisation auf einer Pfropfgrundlage initiierten Pfropfästen bzw. Pfropfzweigen, wobei als Pfropfgrundlage Polyester, Polyether, Polyetherester, Polyamide, Polyurethane, Polyesterurethane, Polyetherurethane, Polyetheresterurethane, Polyamidurethane, Polyharnstoffe, Polyamine, Polycarbonate, Polyvinylester oder Polymere, die im Polymerrückgrat ein Gemisch aus zwei oder mehr der genannten Polymergruppen aufweisen, eingesetzt werden, und das Pfropfpolymere mindestens 0,5 Gew.-%, bezogen auf die Pfropfgrundlage, an Pfropfästen bzw. Pfropfzweigen aufweist.

Unter einem "Bindemittel" wird im Rahmen der vorliegenden Erfindung ein Polymeres oder ein Gemisch aus zwei oder mehr Polymeren verstanden, welches nach einer erfolgten Aushärungsreaktion maßgeblich zur Festigkeit eines mit Hilfe eines solchen Bindemittels hergestellten Gebildes beiträgt. Ein erfindungsgemäß als "Bindemittel" bezeichnetes Polymeres weist mindestens eine reaktive funktionelle Gruppe auf, mit deren Hilfe eine Kettenverlängerung, Vernetzung oder Anbindung des Bindemittels an ein Substrat, oder zwei oder mehr der genannten Vorgänge ermöglicht werden. Ein erfindungsgemäß als "Bindemittel" bezeichnetes Polymeres weist ein Molekulargewicht von mindestens 1000, beispielsweise mindestens etwa 1500 oder mindestens etwa 2000 auf.

Unter dem Begriff "Molekulargewicht" wird im Rahmen der vorliegenden Erfindung der Wert für das Zahlenmittel des Molekulargewichts (M_{w}) verstanden, soweit er mittels GPC unter üblichen Bedingungen gegen Polystyrol als Standard erhältlich ist.

Ein erfindungsgemäßes "Bindemittel" kann beispielsweise lediglich eine Sorte von Polymeren enthalten, die sich beispielsweise nur im Hinblick auf Molekulargewicht oder Zahl der reaktiven funktionellen Gruppen unterscheiden. Ein erfindungsgemäßes "Bindemittel" kann jedoch auch ein Gemisch aus zwei oder mehr Polymeren, die im Rahmen der vorliegenden Erfindung als Bindemittel geeignet sind, aufweisen. Derartige unterschiedliche Polymere können sich beispielsweise in der Art der chemischen Verknüpfung der Monomeren untereinander oder in der Art der Monomerenzusammensetzung unterscheiden.

Unter einer "Bindemittelzusammensetzung" wird im Rahmen der vorliegenden Erfindung ein Gemisch aus einem Bindemittel und mindestens einem weiteren Polymeren, verstanden. Eine erfindungsgemäße "Bindemittelzusammensetzung" kann beispielsweise ein Bindemittel und ein weiteres Polymeres, das keine gemäß der obigen Definition reaktiven Gruppen aufweist, enthalten.

Ein erfindungsgemäßes Bindemittel enthält mindestens ein Alkoxysilylgruppen tragendes Pfropfpolymeres. Unter einem "Pfropfpolymeren" wird im Rahmen der vorliegenden Erfindung ein nach dem Verfahren der Pfropfcopolymersation hergestelltes Polymeres verstanden. Charakteristisch für den Aufbau von Pfropfpolymeren ist, daß sie an einer Hauptkette längere Seitenketten tragen. Pfropfpolymere gemäß der vorliegenden Erfindung können identische oder unterschiedliche Haupt- und Seitenketten aufweisen. Pfropfpolymere mit unterschiedlichen Haupt- und Seitenketten werden häufig auch als Pfropfcopolymere bezeichnet. Im Rahmen des vorliegenden Textes werden derartige Polymere der Einfachheit halber grundsätzlich als Pfropfpolymere bezeichnet.

Die Hauptkette der Pfropfpolymere wird im Allgemeinen als Rückgratpolymeres, Pfropfsubstrat oder Pfropfgrundlage bezeichnet, die Seitenketten als Pfropfäste oder Pfropfzweige. Die Herstellung von erfindungsgemäß einsetzbaren Pfropfpolymeren erfolgt in der Regel durch Polymerisation von Monomeren, welche später die Pfropfäste oder Pfropfzweige bilden, im Gegenwart der Pfropfgrundlage. Die Pfropfgrundlage dient in diesem Fall als Makroinitiator, der eine radikalische oder ionische Polymerisation der Pfropfäste bzw. Pfropfzweige initiiert.

Grundsätzlich eignen sich im Rahmen der vorliegenden Erfindung als Pfropfgrundlage alle Polymeren, an denen mittels eines radikalischen oder ionischen Mechanismus eine Pfropfung durchgeführt werden kann. Es ist im Rahmen der vorliegenden Erfindung möglich als Pfropfgrundlage Polymere einzusetzen, die bereits mindestens zwei reaktive funktionelle Gruppen X aufweisen. Es ist jedoch ebenso möglich als Pfropfgrundlage Polymere einzusetzen, die erst im Anschluß an eine Pfropfung oder währenddessen mit entsprechenden funktionellen Gruppen X beispielsweise im Rahmen einer polymeranalogen Reaktion, ausgestattet werden.

Als Pfropfgrundlage geeignete Polymere sind Polyester, Polyether, Polyetherester, Polyamide, Polyurethane, Polyesterurethane, Polyetherurethane, Polyetheresterurethane, Polyamidurethane, Polyharnstoffe, Polyamine, Polycarbonate oder Polyvinylester. Ebenso geeignet sind Polymere, die im Polymerrückgrat ein Gemisch aus zwei oder mehr der genannten Polymergruppen aufweisen.

Zum Einsatz als Pfropfgrundlage im Rahmen der vorliegenden Erfindung geeignet, sind Polyester mit einem Molekulargewicht von etwa 1.000 bis etwa 100.000, beispielsweise etwa 3.000 bis etwa 50.000. So können beispielsweise Polyester verwendet werden, die durch Umsetzung von niedermolekularen Alkoholen, insbesondere von Ethylenglykol, Diethylenglykol, Neopentylglykol, Hexandiol, Butandiol, Propylenglykol, Glyzerin oder Trimethylolpropan mit entsprechenden, mindestens difunktionellen Säuren entstehen. Ebenfalls als polyfunktionelle Alkohole zur Herstellung von entsprechenden Polyestern geeignet sind 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol.

Geeignete Polyesterpolyole sind beispielsweise durch Polykondensation herstellbar. So können difunktionelle oder trifunktionelle Alkohole oder ein Gemisch aus zwei oder mehr davon, mit Dicarbonsäuren oder Tricarbonsäuren oder einem Gemisch aus zwei oder mehr davon, oder deren reaktiven Derivaten, zu Polyesterpolyolen kondensiert werden. Geeignete Dicarbonsäuren sind beispielsweise Bernsteinsäure und ihre höheren Homologen mit bis zu 44 C-Atomen, ferner ungesättigte Dicarbonsäuren wie Maleinsäure oder Fumarsäure sowie aromatische Dicarbonsäuren, insbesondere die isomeren Phthalsäuren wie Phthalsäure, Isophthalsäure oder Terephthalsäure. Als Tricarbonsäuren sind beispielsweise Zitronensäure oder Trimellithsäure geeignet. Im Rahmen der Erfindung besonders geeignet sind Polyesterpolyole aus mindestens einer der genannten Dicarbonsäuren und Glyzerin, welche einen Restgehalt an OH-Gruppen aufweisen. Besonders geeignete Alkohole sind Hexandiol, Ethylenglykol, Diethylenglykol oder Neopentylglykol oder Gemische aus zwei oder mehr davon. Besonders geeignete Säuren sind Phthalsäure, Isophthalsäure, Terephthalsäure oder Adipinsäure oder Gemische aus zwei oder mehr davon.

Weiterhin als Polyolkomponente zur Herstellung der Polyester einsetzbare Polyole sind beispielsweise Diethylenglykol oder höhere Polyethylenglykole mit einem Molekulargewicht (Mₙ) von etwa 100 bis etwa 22.000, beispielsweise etwa 200 bis etwa 15.000 oder etwa 300 bis etwa 10.000, insbesondere etwa 500 bis etwa 2.000.

Im Rahmen der vorliegenden Erfindung als Pfropfgrundlage einsetzbare Polyester umfassen insbesondere die Umsetzungsprodukte von polyfunktionellen, vorzugsweise difunktionellen Alkoholen (gegebenenfalls zusammen mit geringen Mengen an trifunktionellen Alkoholen) und polyfunktionellen, vorzugsweise difunktionellen Carbonsäuren. Anstatt freier Polycarbonsäuren können (sofern existent) auch die entsprechenden Polycarbonsäureanhydride oder entsprechende Polycarbonsäureester mit Alkoholen mit vorzugsweise 1 bis 8 C-Atomen eingesetzt werden. Die Polycarbonsäuren können aliphatisch, cycloaliphatisch, aromatisch und/oder heterocyclisch sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Tetrabromphthalsäureanhydrid Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Gegebenenfalls können untergeordnete Mengen an monofunktionellen Fettsäuren im Reaktionsgemisch vorhanden sein.

Entsprechende Polyester können beispielsweise Carboxylendgruppen aufweisen. Aus Lactonen, beispielsweise ε-Caprolacton oder Hydroxycarbonsäuren, beispielsweise ω-Hydroxycapronsäure, erhältliche Polyester, können ebenfalls mindestens anteilsweise eingesetzt werden.

Als Pfropfgrundlage eignen sich weiterhin Polyether, beispielsweise Polyalkylenglykole, mit einem Molekulargewicht (Mₙ) von mindestens etwa 400 oder darüber, beispielsweise mindestens etwa 600 oder mindestens etwa 1.000. Die Polyether können wasserlöslich oder wasserunlöslich sein.

Solche Polyether werden in der Regel durch katalytisch unterstützte ringöffnende Polymerisation von Epoxiden oder höheren cyclischen Ethern wie Tetrahydrofuran hergestellt.

Üblicherweise wird ausgehend von einem sogenannten Startermolekül polymerisiert. Als Startermoleküle eignen sich grundsätzlich alle Verbindungen die, gegebenenfalls in Anwesenheit eines geeigneten Katalysators, zur Ringöffnung von Epoxidringen oder höheren cyclischen Ethern in der Lage sind. Beispielsweise sind dies primäre, sekundäre oder tertiäre Amine, primäre, sekundäre oder tertiäre Alkohole, Thiole oder Carbonsäuren.

Die Polymerisation verläuft in der Regel unter basischer Katalyse. Im Rahmen der vorliegenden Erfindung werden als Polyether beispielsweise Polyalkylenglykole eingesetzt, wie sie durch Polymerisation von Ethylenoxid, gegebenenfalls im Gemisch mit C₃₋₁₂-Alkylenoxiden, erhältlich sind. Als Pfropfgrundlage geeignet sind beispielsweise Polyethylenglykole mit einem Anteil an C₃- oder C₄-Einheiten, oder beidem, wie sie durch Copolymerisation von Ethylenoxid mit Propylenoxid oder Butylenoxid oder deren Gemisch erhältlich sind.

Ebenso geeignet sind Polyether, die mittels Co-Zn-Cyanidkomplexkatalyse erhältlich sind.

In einer bevorzugten Ausführungsform der Erfindung werden als Pfropfgrundlage Polyalkylenglykole eingesetzt, die unter Verwendung von primären, sekundären oder tertiären Alkoholen oder Gemischen aus zwei oder mehr davon als Startmoleküle hergestellt wurden.

Als Startermoleküle sind grundsätzlich alle mono- oder polyfunktionellen Alkohole oder deren Gemische geeignet, vorzugsweise werden im Rahmen der vorliegenden Erfindung jedoch Polyalkylenglykole eingesetzt, die unter Verwendung eines zwei- oder dreiwertigen Alkohols, beispielsweise Ethylenglykol, Propylenglykol, Butylenglykol, Pentandiol, Hexandiol, Heptandiol, Octandiol sowie deren höheren Homologen, Neopentylglykol, Glyzerin, Trimethylolpropan, Triethylolpropan, Pentaerythrit, Glucose, Sorbit, Mannit oder eines Gemischs aus zwei oder mehr davon als Startmolekül, hergestellt wurden.

Die im Rahmen des erfindungsgemäßen Verfahrens als Pfropfgrundlage einsetzbaren Polyalkylenglykole weisen in der Regel ein Molekulargewicht (Mₙ) von mindestens etwa 500 oder mindestens etwa 1.000, beispielsweise mindestens etwa 2.000 oder mindestens etwa 5.000 auf. Die Obergrenze des Molekulargewichts liegt beispielsweise bei etwa 50.000, insbesondere bei bis zu etwa 30.000.

Die Polyalkylenglykole können einzeln, d. h. als Polyadditionsprodukt mit üblicherweise bei basisch katalysierten Additionen von Alkylenoxiden an Wasser oder andere Startermoleküle entstehenden Molekulargewichtsverteilungen eingesetzt werden. Es ist jedoch ebenfalls möglich, Gemische verschiedener Polyalkylenglykole mit unterschiedlichen Molekulargewichtsverteilungen einzusetzen. Weiterhin ist es möglich Polyalkylenglykole einzusetzen, die durch Addition nur einer Alkylenoxidverbindung an ein Startermolekül entstehen. Es ist jedoch ebenfalls möglich Polyalkylenglykole einzusetzen, die durch Addition verschiedener Alkylenoxide erhältlich sind. Es kann sich dabei sowohl um BlockCopolymere als auch um statistische Copolymere handeln.

Ebenfalls im Rahmen der vorliegenden Erfindung als Pfropfgrundlage geeignet sind Polyetherester, wie sie sich durch Polykondensation von Polycarbonsäuren mit Polyethern erhalten lassen. Grundsätzlich eignen sich hierzu die oben genannten Polycarbonsäuren und Polyether.

Weiterhin als Pfropfgrundlage geeignet sind Polyamide, wie sie sich durch Polykondensation von Polycarbonsäuren mit Polyaminen, insbesondere durch Umsetzung von Dicarbonsäuren mit Diaminen, herstellen. Geeignete Dicarbonsäuren sind beispielsweise die im Rahmen dieses Textes bereits erwähnten, zur Herstellung von Polyestern geeigneten Dicarbonsäuren, insbesondere die Dimerfettsäuren.

Als Pfropfgrundlage im Rahmen der vorliegenden Erfindung können weiterhin Polyurethane mit einem Molekulargewicht (Mₙ) von mindestens etwa 2.000, beispielsweise etwa 5.000 oder mehr eingesetzt werden. Als Pfropfgrundlage sind sowohl ionische als auch nichtionische, wasserlösliche oder wasserunlösliche Polyurethane geeignet.

Polyurethane, wie sie im Rahmen der vorliegenden Erfindung als Pfropfgrundlage einsetzbar sind, werden üblicherweise durch Umsetzung von mindestens einem Polyisocyanat, vorzugsweise einem Diisocyanat, und einer Polyolkomponente, die vorzugsweise überwiegend aus Diolen besteht, hergestellt. Die Polyolkomponente kann dabei nur ein Polyol enthalten, es kann jedoch auch ein Gemisch aus zwei oder mehr verschiedenen Polyolen als Polyolkomponente eingesetzt werden. Als Polyolkomponente oder zumindest als Bestandteil der Polyolkomponente sind beispielsweise Polyalkylenoxide, insbesondere Polyethylenoxid, besonders geeignet.

Der Begriff "ionisch" bedeutet, daß das Polyurethan ionische oder zumindest im Rahmen einer Säure-Base Reaktion ionisierbare Gruppen als Löslichkeitsvermittler aufweist, beispielsweise Carboxylat-, Sulfonat, Phosphonat- oder Ammonium-Gruppen.

Der Begriff "nichtionisch" bedeutet entsprechend, daß das Polyurethan keine ionischen Gruppen aufweist, also beispielsweise keine Carboxylat-, Sulfonat, Phosphonat- oder Ammonium-Gruppen. Eine gegebenenfalls vorliegende Wasserlöslichkeit beruht bei nichtionischen Polyurethanen beispielsweise auf den hydrophilen nichtionischen Gruppen des Polyoxyethylens - [CH₂-CH₂-O-]ₙ -. Diese Struktureinheiten leiten sich insbesondere von als Polyolkomponente eingesetztem Polyethylenoxid ab. Unter Polyethylenoxid sind dabei nicht nur Polyadditionsprodukte von Ethylenoxid an Wasser oder Ethylenglykol als Startmolekül zu verstehen, sondern auch Polyadditionen von Ethylenoxid an andere zweiwertige Alkohole, z. B. Butandiol, Hexandiol oder 4,4'-Dihydroxy-diphenylpropan. Es können auch Gemische aus zwei oder mehr verschiedenen Polyethylenoxiden eingesetzt werden, die sich beispielsweise im mittleren Molekulargewicht M_{w} oder Mₙ oder in beidem unterscheiden. Es können auch Copolymere von Ethylenoxid mit höheren Alkylenoxiden, z. B. mit Propylenoxid, als Polyolkomponente verwendet werden.

Das Polyethylenoxid in der Polyolkomponente kann ganz oder teilweise durch andere Diole ersetzt werden, die einen hydrophoben Rest mit einer Wasserlöslichkeit von höchstens 2 g/100 g Wasser enthalten. Bei dem hydrophoben Rest handelt es sich insbesondere um aliphatische oder alicyclische Strukturen mit 2 bis 44, insbesondere 6 bis 36 C-Atomen. Die Reste können auch aromatische Strukturen enthalten. Bevorzugt sind Diole mit mindestens einer primären OH-Gruppe, insbesondere 1,2- oder α,ω-Diole. Aber auch Diole mit vicinaler Stellung der OH-Gruppen sind geeignet.

Ein Polyalkylenoxid in der Polyolkomponente weist vorzugsweise ein Molekulargewicht (Mₙ) von etwa 200 bis etwa 20.000 auf, insbesondere etwa 1.000 bis etwa 15.000, beispielsweise etwa 1.550, 3.000,6.000 oder 12.000.

Ferner können das Polyethylenglykol oder Teile des Polyethylenglykols durch hydrophobe homopolymere Polyalkylenglykole ersetzt werden, wobei die Alkylengruppe mehr als 2, vorzugsweise 3 oder 4 C-Atome hat. Ihre Molekulargewichte betragen insbesondere 150 bis 10.000 g/mol.

Konkrete Beispiele für die hydrophoben Diole mit reinen CH-Resten und mit Ethergruppierungen sind Polypropylenglykol (PPG), Polybutylenglykol, Polytetrahydrofuran, Polybutadiendiol, hydroxylterminierte Ethylen-Butylen-Copolymere (z.B. KRATON LIQUID Polymer L-2203), hydriertes Polybutadiendiol und Alkandiole mit 4 bis 44 C-Atomen. Bevorzugte hydrophobe Diole sind Polypropylenglykol, Polytetrahydrofuran mit einem Molekulargewicht von 150 bis 10.000, insbesondere 200 bis 4.500, besonders bevorzugt 250 bis 1.000, sowie 1,10-Decandiol, 1,12-Dodecandiol, 1,12-Octadecandiol, Dimerfettsäurediol, 1,2-Octandiol, 1,2-Dodecandiol, 1,2-Hexadecandiol, 1,2-Octadecandiol, 1,2-Tetradecandiol, 4,4-Isopropylidendicyclohexanol und deren Isomerengemische, 4,8-Bis(hydroxymethyl)tricyclo[5,2,1,0^{2,6}]decane und deren Isomerengemische, 1,4:3,6-Dianhydro-D-mannitol, 1,4:3,6-Dianhydro-D-sorbitol, 1,16-Hexadecandiol, Bisphenol-A sowie deren Prop- oder Ethoxylierungsprodukte oder deren Gemische, insbesondere mit bis zu 30 EO-Einheiten, und schließlich Monofettsäureester des Glyzerins mit bis zu 22 C-Atomen enthaltenden Fettsäuren, z.B. Glyzerinmonoester der Behensäure, Ölsäure, Stearinsäure, Myristinsäure. Natürlich können auch Mischungen aus zwei oder mehr der genannten hydrophoben Diole eingesetzt werden.

Polyethylenglykole können darüber hinaus in einem Ausmaß von 0 bis 5, insbesondere 0,2 bis 2% durch höherfunktionelle Alkohole, insbesondere durch Triole ersetzt werden, z.B. durch Glyzerin, Trimethylolpropan, Triethanolamin oder deren ethoxylierte oder propoxylierte Varianten. Auch Pentaerythrit ist brauchbar. Möglich sind auch ethoxylierte oder propoxylierte Varianten von Aminen oder Aminoalkoholen, z.B. ausgehend von Ethylendiamin, Diethylentriamin, und deren höheren Homologen, beispielsweise Aminophenol, N-2-Aminoethylpiperazin.

Weiterhin als Polyolkomponenten zur Herstellung entsprechender Polyurethane geeignet sind Polyesterpolyole, wie sie bereits oben im Rahmen dieses Textes beschrieben wurden.

Neben den Polyolen der Polyolkomponente sind Diisocyanate wesentliche Bausteine der als Pfropfgrundlage einsetzbaren Polyurethane. Dabei handelt es sich um Verbindungen der allgemeinen Struktur O=C=N-X-N=C=O, wobei X ein alipathischer, alicyclischer oder aromatischer Rest ist, vorzugsweise ein aliphatischer oder alicyclischer Rest mit 4 bis 18 C-Atomen.

Beispielsweise seien als geeignete Isocyanate 1,5-Naphthylendiisocyanat, 4,4'-Diphenylmethandiisocyanat (MDI), hydriertes MDI (H₁₂-MDI), Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylendiisocyanat, Phthalsäure-bis-isocyariato-ethylester, ferner Diisocyanate mit reaktionsfähigen Halogenatomen wie 1-Chlormethylphenyl-2,4-diisocyanat, 1-Brommethylphenyl-2,6-diisocyanat oder 3,3-Bis-chlormethylether-4,4'-diphenyldiisocyanat genannt. Schwefelhaltige Polyisocyanate erhält man beispielsweise durch Umsetzung von 2 mol Hexamethylendiisocyanat mit 1 mol Thiodiglykol oder Dihydroxydihexylsulfid. Weitere einsetzbare Diisocyanate sind beispielsweise Trimethylhexamethylendiisocyanat, 1,4-Diisocyanatobutan, &1,12-Diisocyanatododecan und Dimerfettsäurediisocyanat. Besonders geeignet sind: Tetramethylen-, Hexamethylen-, Undecan-, Dodecamethylen-, 2,2,4-Trimethylhexan-, 1,3-Cyclohexan-, 1,4-Cyclohexan-, 1,3- bzw. 1,4-Tetramethylxylol-, Isophoron-, 4,4-Dicyclohexylmethan- und Lysinester-di-isocyanat. Ganz besonders bevorzugt sind Tctramethylxylylendiisocyanat (TMXDI), insbesondere das von der Fa. Cyanamid erhältliche m-TMXDI und TDI.

Zur weiteren Erhöhung des Molekulargewichts kann beispielsweise auf bekannte Weise eine Kettenverlängerung vorgenommen werden. Hierzu werden zunächst Präpolymere mit überschüssigem Diisocyanat hergestellt, die dann anschließend mit kurzkettigen Aminoalkoholen, Diolen, Diaminen oder mit Wasser unter Erhöhung des Molekulargewichts verlängert werden.

Hierzu werden zunächst Präpolymere mit überschüssigem Diisocyanat hergestellt, die dann anschließend mit kurzkettigen Diolen oder Diaminen oder mit Wasser verlängert werden. Als Kettenverlängerer seien konkret genannt:
- gesättigte und ungesättigte Glykole wie Ethylenglykol oder Kondensate des Ethylenglykols, Butandiol-1,3, Butandiol-1,4, 2-Buten-1,4-diol, 2-Butin-1,4-diol, Propandiol-1,2, Propandiol-1,3, Neopentylglykol, Hexandiol, Bishydroxymethylcyclohexan, Dioxyethoxyhydrochinon, Terephthalsäurebisglykolester, Bernsteinsäure-di-2-hydroxyethylamid, Bemsteinsäuredi-N-methyl-(2-hydroxyethyl)amid, 1,4-Di(2-hydroxymethylmercapto)-2,3,5,6-tetrachlorbenzol, 2-Methylen-propandiol-(1,3), 2-Methylpropandiol-(1,3), 3-Pyrrolidino-1,2-propandiol, 2-Methylenpentandiol-2,4, 3-Alkoxy-1,2-propandiol, 2-Ethylhexan-1,3-diol, 2,2-Dünethylpropandiol-1,3, 1,5-Pentandiol; 2,5-Dimethyl-2,5-hexandiol, 3-Phenoxy-1,2-propandiol, 3-Benzyloxy-1,2-propandiol, 2,3-Dimethyl-2,3-butandiol, 3-(4-Methoxyphenoxy)-1,2-propandiol und Hydroxymethylbenzylalkohol;
- aliphatische, cycloaliphatische und aromatische Diamine wie Ethylendiamin, Hexamethylendiamin, 1,4-Cyclohexylendiamin, Piperazin, N-Methyl-propylendiamin, Diaminodiphenylsulfon, Diaminodiphenylether, Diaminodiphenyldimethylmethan, 2,4-Diamino-6-phenyltriazin, Isophorondiamin, Dimerfettsäurediamin, Diaminodiphenylmethan oder die Isomeren des Phenylendiamins;
- weiterhin auch Carbohydrazide oder Hydrazide von Dicarbonsäuren;
- Aminoalkohole wie Ethanolamin, Propanolamin, Butanolamin, N-Methyl-ethanolamin, N-Methyl-isopropanolamin, Diethanolamin, Triethanolamin sowie höhere Di- oder Tri(alkanolamine);
- aliphatische, cycloaliphatische, aromatische und heterocyclische Mono- und Diaminocarbonsäuren wie Glycin, 1- und 2-Alanin, 6-Aminocapronsäure, 4-Aminobuttersäure, die isomeren Mono- und Diaminobenzoesäuren sowie die isomeren Mono- und Diaminonaphthoesäuren.

Vorzugsweise wird das als Pfropfgrundlage eingesetzte Polyurethan jedoch in einem einstufigen Verfahren hergestellt. Dabei werden beispielsweise zunächst alle Ausgangsstoffe in Gegenwart eines organischen Lösemittels bei einem Wassergehalt von weniger als 0,5 Gew.-% gemischt. Die Mischung wird für ca. 1 bis 30 Stunden auf 60 bis 200 °C, insbesondere auf 80 bis 180 °C und vorzugsweise auf 100 bis 150 °C erhitzt. Die Reaktionszeit kann durch Anwesenheit von Katalysatoren verkürzt werden.

Insbesondere sind als Katalysatoren tertiäre Amine geeignet, z.B. Triethylamin, 1,4-Diazabicyclo[2,2,2]octan (= DABCO) Dimethylbenzylamin, Bis-dimethylaminoethylether und Bis-Methylaminomethylphenol. Besonders geeignet sind 1-Methyl-imidazol, 2-Methyl-1-vinylimidazol, 1-Allylimidazol, 1-Phenylimidazol, 1,2,4,5-Tetramethylimidazol, 1-(3-Aminopropyl)imidazol, Pyrimidazol, 4-Dimethylamino-pyridin, 4-Pyrrolidinopyridin, 4-Morpholino-pyridin, 4-Methylpyridin und Dimorpholinodiethylether.

Es können auch zinnorganische Verbindungen als Katalysatoren eingesetzt werden. Darunter werden Verbindungen verstanden, die sowohl Zinn als auch einen organischen Rest enthalten, insbesondere Verbindungen, die eine oder mehrere Sn-C-Bindungen enthalten. Zu den zinnorganischen Verbindungen im weiteren Sinne zählen z.B. Salze wie Zinnoctoat und Zinnstearat. Zu den Zinnverbindungen im engeren Sinne gehören vor allem Verbindungen des vierwertigen Zinns der allgemeinen Formel Rₙ₊₁SnZ₃₋ₙ, wobei n für eine Zahl von 0 bis 2 steht, R für eine Alkylgruppe oder eine Arylgruppe oder beides steht und Z schließlich für eine Sauerstoff-, Schwefel- oder Stickstoff-Verbindung oder ein Gemisch aus zwei oder mehr davon steht. Zweckmäßigerweise enthält R mindestens 4 C-Atome, insbesondere mindestens 8. Die Obergrenze liegt in der Regel bei 12 C-Atomen. Vorzugsweise ist Z eine Sauerstoffverbindung, also ein zinnorganische Oxid, Hydroxid, Carboxylat oder ein Ester einer anorganischen Säure. Z kann aber auch eine Schwefelverbindung sein, also ein zinnorganisches Sulfid, Thiolat oder ein Thiosäureester. Bei den Sn-S-Verbindungen sind vor allem Thioglykolsäureester geeignet, z.B. Verbindungen mit folgenden Resten:

-S-CH₂-CH₂-CO-O-(CH₂)₁₀-CH₃

oder

-S-CH₂-CH₂-CO-O-CH₂-CH(C₂H₅)-CH₂-CH₂-CH₂-CH₃.

Eine weitere bevorzugte Verbindungsklasse stellen die Dialkyl-Zinn-(IV)-Carboxylate dar (Z=O-CO-R¹). Die Carbonsäuren haben 2, vorzugsweise wenigstens 10, insbesondere 14 bis 32 C-Atome. Es können auch Dicarbonsäuren eingesetzt werden. Als Säuren sind beispielsweise Adipinsäure, Maleinsäure, Fumarsäure, Terephthalsäure, Phenylessigsäure, Benzoesäure, Essigsäure, Propionsäure sowie insbesondere Capryl-, Caprin-, Laurin-, Myristin-, Palmitin- und Stearinsäure geeignet. Besonders geeignet sind beispielsweise Dibutylzinn-diacetat und -dilaurat sowie Dioctylzinn-diacetat und -dilaurat.

Auch Zinnoxide und -sulfide sowie -thiolate sind im Rahmen der vorliegenden Erfindung geeignet. Konkrete Verbindungen sind: Bis(tributylzinn)oxid, Dibutylzinndidodecylthiolat, Dioctylzinndioctylhiolat, Dibutylzinn-bis(thioglykolsäure-2-ethyl-hexylester), Octylzinn-tris-(thioglykolsäure-2-ethyl-hexylester), Dioctylzinn-bis(thioethylenglykol-2-ethylhexoat), Dibutylzinn-bis(thioethylenglykollaurat), Dibutylzinnsulfid, Dioctylzinnsulfid, Bis(tributylzinn)sulfid, Dibutylzinn-bis(thioglykolsäure-2-ethylhexylester), Dioctylzinn-bis(thioethylenglykol-2-ethylhexoat), Trioctylzinnthioethylenglykol-2-ethylhexoat sowie Dioctylzinn-bis(thiolatoessigsäure-2-ethylyhexylester), Bis(S,S-methoxycarbonyl ethyl)zinn-bis(thiolatoessigsäure-2-ethylhexylester), Bis(S,S-acetyl-ethyl)zinn-bis(thiolatoessigsäure-2-ethyl-hexylester), Zinn(II)octylhiolat und Zinn(II)-thioethylenglykol-2-ethylhexoat.

Außerdem seien noch genannt: Dibutylzinndiethylat, Dihexylzinndihexylat, Dibutylzinndiacetylacetonat, Dibutylzinndiethylacetylacetat, Bis(butyldichlorzinn)oxid, Bis(dibutylchlorzinn)sulfid, Zinn(II)phenolat, Zinn(II)-acetylacetonat, sowie weitere α-Dicarbonylverbindungen wie Acetylaceton, Dibenzoylmethan, Benzoylaceton, Acetessigsäureethylester, Acetessigsäure-n-propylester, α,α'-Diphenylacetessigsäureethylester und Dehydroacetessigsäure.

Der Katalysator wird vorzugsweise der Polyolkomponente zugesetzt. Seine Menge richtet sich nach seiner Aktivität und den Reaktionsbedingungen. Sie liegt vorzugsweise im Bereich von 0,001 bis 0,5 Gew.-%, bezogen auf das Polyol.

Vorzugsweise wird jedoch ohne Katalysator gearbeitet. Auch das Lösemittel wird zweckmäßigerweise weggelassen. Unter "Lösemitteln" werden im Rahmen des vorliegenden Textes inerte organische flüssige Stoffe mit einem Siedepunkt von weniger als 200°C bei Normaldruck (1 bar) verstanden.

Die Umsetzung wird vorzugsweise so vorgenommen, daß das Verhältnis von OH-Gruppen in der Polyolkomponente zu NCO-Gruppen im Polyisocyanat etwa 1,0 bis etwa 2,2, insbesondere etwa 1,5 bis 2,0, beispielsweise etwa 1,6 bis 1,9 oder etwa 1,65 bis 1,85, beträgt.

Eine Möglichkeit zur Einführung von hydrophilen, ionenbildenden Strukturelementen ist die Reaktion von OH-terminierten Polyurethanoligomeren mit Dicarbonsäureanhydriden. Diese können insgesamt 2 bis 44, vorzugsweise 2 bis 12 C-Atome zwischen den Bisacylgruppen wie Alkylen-, Alkenylen- oder Arylen-Gruppierung enthalten. Beispielsweise sind Bernsteinsäureanhydrid, Glutarsäureanhydrid, 1,2,3,6-Tetrahydrophthalsäureanhydrid und dessen Isomere, Phthalsäureanhydrid, Trimellithsäureanhydrid, 7-Oxabicyclo[2,2,1]hept-5-en-2,3-dicarbonsäureanhydrid, 5-Norbornen-2,3-dicarbonsäureanhydrid und deren Isomere, Diglykolsäureanhydrid, Maleinsäureanhydrid, Dimethylmaleinsäureanhydrid, Citraconsäureanhydrid, Itaconsäureanhydrid, Alkenylbernsteinsäureanhydride, vorzugsweise solche deren Alkenylgruppen mehr als 2 C-Atome, insbesondere mehr als 5, besonders bevorzugt mehr als 7 C-Atome besitzen, geeignet. Konkret genannt seien: n-Octenylbernsteinsäureanhydrid, n-Dodecenylbemsteinsäureanhydrid, Tetrapropenylbemsteinsäureanhydrid, n-Hexadecenylbernsteinsäureanhydrid und n-Octadenylbernsteinsäureanhydrid. Der Alkenylrest kann linear oder verzweigt aufgebaut sein. Darüber hinaus können auch Mischungen von Alkenylgruppen mit verschiedener Anzahl von C-Atomen vorkommen. Auch Gemische mehrerer Anhydride sind möglich, bevorzugt sind jedoch cyclische Anhydride.

Es ist jedoch auch möglich, einen molaren Überschuß an Isocyanaten einzusetzen, wobei NCO-terminierte Oligomere entstehen.

Hydrophobe Strukturelemente können beispielsweise durch Reaktion von NCO-terminierten Oligomeren mit Monoolen oder monofunktionellen Aminen mit ≥ 2 C-Atomen, insbesondere ≥ 6, ≥ 10 oder ≥ 16 C-Atomen erhalten werden. Konkret seien genannt: Poly-Ethylen/Butylen mit 1 OH-Gruppe, z.B. mit einem OH-Äquivalentgewicht von 3600 (Kraton L 1203) sowie 1-Hexanol, 1-Heptanol, 1-Octanol, 1-Nonanol, 1-Decanol, 1-Undecanol, 10-Undecen-1-ol, 1-Dodecanol, 1-Tridecanol, 1-Tetradecanol, 1-Pentadecanol, 1-Hexadecanol, 1-Heptadecanol, 1-Octadecanol, 9-cis-Octadecen-1-ol, 9-trans-Octadecen-1-ol, 9-cis-Octadecen-1,12-diol, all-cis-9,12-0ctadecadien-1-ol, all-cis-9,12,15-Octadecatrien-1-ol, 1-Nonadecanol, 1-Eicosanol, 9-cis-Eicosen-1-ol, 5,8,11,14-Eicosatetraen-1-ol, 1-Heneicosanol, 1-Docosanol, 13-cis-Docosen-1-ol, 13-trans-Docosen-1-ol. Auch die entsprechenden Fettamine sind als hydrophobierende Strukturelemente möglich.

Eine weitere Möglichkeit zur Einführung hydrophiler ionenbildender Strukturen in die als Pfropfgrundlage einsetzbaren Polyurethane ist schließlich die Reaktion NCO-terminierter Oligomerer mit Hydroxycarbonsäuren oder Aminocarbonsäuren mit Alkylen-, Alkenylen- oder Arylen-Gruppierungen wie bei den Dicarbonsäureanhydriden. Als Beispiele seien genannt: Glykolsäure, Milchsäure, Capronsäure und Mandelsäure sowie Aminocapronsäure, Aminododecansäure, Glycin, Alanin und Phenylalanin. Ebenfalls als Pfropfgrundlage geeignet sind beispielsweise Polycarbonate. Geeignete Polycarbonate können durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden.

Weiterhin als Pfropfgrundlage geeignet sind die Polymerisate der Ester ungesättigter Alkohole mit entsprechenden Carbonsäuren (Polyvinylester). Geeignete ungesättigte Alkohole sind beispielsweise die ungesättigtem aliphatischen Alkohole mit 2 bis etwa 22 C-Atomen, insbesondere mit 2 bis etwa 8 C-Atomen. Als Carbonsäuren eignen sich die linearen und verzweigten Alkansäuren mit 2 bis etwa 22 C-Atomen, insbesondere mit 2 bis etwa 8 C-Atomen. In einer bevorzugten Ausführungsform der Erfindung wird Polyvinylacetat eingesetzt. Geeignete Polyvinylacetate sind beispielsweise unter der Bezeichnung Vinnapas D50 von der Firma Wacker, Mowilith D 60 von der Firma Clariant oder Vinnamul 60 044, Vinnamul 9300, Vinnamul 9960 oder Vinnamul 84125 von der Firma Vinnamul (NL) erhältlich.

Die oben beschriebenen Pfropfgrundlagen tragen entsprechend der oben genannten Definition Pfropfäste. Als Pfropfäste eignen sich grundsätzlich alle diejenigen der oben bereits als Pfropfgrundlage dargestellten Polymeren, die mit den als Pfropfgrundlage genannten Polymeren im Sinne einer Pfropfreaktion umsetzbar sind.

Im Rahmen einer bevorzugten Ausführungsform der vorliegenden Erfindung werden zur Pfropfung der oben genannten Pfropfgrundlagen jedoch Vinylchlorid, Vinylodenchlorid, Chloropren, Styrol, Acrylsäureester, Methacrylsäureester, Vinlyester, Acrylnitril oder Dibutylmaleinat eingesetzt.

Das Gewichtsverhältnis von Pfropfästen zur Pfropfgrundlage wird erfindungsgemäß derart gestaltet, daß die gepfropften Polymeren, beispielsweise gepfropfte Polyole, mindestens 0,5 Gew.-%, beispielsweise mindestens etwa 1 Gew.-% oder mindestens etwa 2 Gew.-%, vorzugsweise mindestens etwa 3 Gew.-% oder mindestens etwa 4 Gew.-% insbesondere jedoch mehr als 10 Gew.-%, bezogen auf die Pfropfgrundlage, an Pfropfästen aufweisen.

Geeignete gepfropfte Polyole sowie deren Herstellung werden z.B. in der US-A 3,383,353, US-A 3,304,273, US-A 5,554,662, EP-A 0 861 861, US-A 4,208,314 oder der US-A 5,854,358 beschrieben.

Die im Rahmen der vorliegenden Erfindung als Bindemittel eingesetzten Pfropfpolymeren, beispielsweise gepfropfte Polyole, weisen mindestens zwei Alkoxysilylgruppen der allgemeinen Formel I auf. Die Alkoxysilylgruppen können dabei beispielsweise terminal an den Enden der Polymerketten des Pfropfpolymeren angeordnet sein. Es ist jedoch im Rahmen der vorliegenden Erfindung ebenso vorgesehen, daß die Alkoxysilylgruppen an einer anderen Stelle innerhalb des Polymerrückgrates oder an einem oder mehreren Pfropfästen angeordnet sind. Ebenso ist im Rahmen der vorliegenden Erfindung eine Kombination dieser Möglichkeiten vorgesehen, d.h. daß beispielsweise eine Alkoxysilylgruppe am Ende der Polymerkette und eine weitere Alkoxysilylgruppe am Polymerrückgrat der Pfropfgrundlage oder innerhalb oder am Ende eines Pfropfastes angebracht ist. Wenn das erfindungsgemäße Bindemittel mehr als zwei Alkoxysilylgruppen, beispielsweise drei, vier oder fünf Alkoxysilylgruppen, aufweist, so können die Alkoxysilylgruppen der allgemeinen Formel I im wesentlichen beliebig an den Enden der Pfropfgrundlage, innerhalb des Polymerrückgrats, der Pfropfgrundlage oder an den Pfropfästen angebracht sein.

Die Herstellung der erfindungsgemäßen Bindemittel kann grundsätzlich nach jeder dem Fachmann bekannten Art erfolgen. Im Rahmen einer bevorzugten Ausführungsform der vorliegenden Erfindung erfolgt die Herstellung eines erfindungsgemäßen Bindemittels jedoch dadurch, daß das Pfropfpolymere durch Umsetzung eines mindestens zwei reaktive funktionelle Gruppen X aufweisenden Pfropfpolymeren mit einer Alkoxysilanverbindung der allgemeinen Formel II

Y-R₃-Si(R₁)ₘ(OR₂)₃₋ₘ (II),

worin R₁ für einen lineraren oder verzweigten Alkylrest mit 1 bis 6 C-Atomen, R₂ für einen linearen oder verzweigten Alkylrest mit 1 bis 6 C-Atomen, R₃ für einen linearen oder verzweigten Alkylrest mit 2 bis 24 C-Atomen, m für eine ganze Zahl von 0 bis 2 und Y für eine funktionelle Gruppe, die mit der funktionellen Gruppe X unter Ausbildung einer kovalenten Bindung reagieren kann, oder Y und R³ zusammen für Wasserstoff stehen, steht, unter Ausbildung einer kovalenten Bildung zwischen X und Y oder X und Si, oder mit einem durch Alkoholyse in eine Alkoxyverbindung der allgemeinen Formel II überführbaren Derivat.

Als ein durch Alkoholyse in eine Alkoxyverbindung der allgemeinen Formel II überführbares Derivat wird im Rahmen der vorliegenden Erfindung jede Verbindung bezeichnet, die durch Alkoholyse in eine Verbindung der allgemeinen Formel II überführbar ist, beispielsweise sind die Verbindungen, die anstatt eines Rest der Allgemeinen Formel I einen Rest Si(Hal)₃ tragen, wobei Hal für ein Halogenatom, insbesondere Chlor oder Brom, steht.

Im Rahmen einer bevorzugten Ausführungsform der vorliegenden Erfindung wird zur Herstellung des erfindungsgemäßen Bindemittels ein Pfropfpolymeres eingesetzt, das über mindestens zwei funktionellen Gruppen X verfügt, die mit einem entsprechenden, mindestens eine Alkoxysilylgruppe tragenden Reagens unter Ausbildung einer kovalenten Bindung reagieren können.

Im Rahmen einer bevorzugten Ausführungsform der vorliegenden Erfindung trägt das Pfropfpolymere mindestens zwei funktionelle Gruppen X, beispielsweise 2, 3, 4, 5 oder 6 funktionelle Gruppen X. In besonderen Fällen, insbesondere im Fall der Polymine, kann die Zahl der funktionellen Gruppen X auch oberhalb dieses Werts liegen, beispielsweise bei 8, 10, 15 oder darüber.

Die funktionellen Gruppen X am Pfropfpolymeren können identisch oder unterschiedlich sein. Wenn die Zahl der funktionellen Gruppen beispielsweise 3 oder mehr beträgt, so können beispielsweise zwei der funktionellen Gruppen X identisch sein, während eine oder mehrere weitere funktionelle Gruppen X sich von den ersten funktionellen Gruppen X unterscheiden. Grundsätzlich kann jede der am Pfropfpolymeren angeordneten funktionellen Gruppen X sich von den weiteren funktionellen Gruppen X am Pfropfpolymeren unterscheiden.

Geeignete funktionelle Gruppen sind beispielsweise OH-, SH-, NH₂-, NHR₄-, COOH-, Epoxy-, NCO-, Anhydrid oder Vinylgruppen, worin R₄ für einen linearen oder verzweigten Alkylrest mit 1 bis 24 C-Atomen oder einen Aralkylrest mit 6 bis 24 C-Atomen oder einen Arylrest mit 6 bis 24 C-Atomen oder einen S- oder N-haltigen Heteroarylrest besteht.

Entsprechende Pfropfpolymere lassen sich in für den Fachmann bekannter Weise aus den oben genannten, als Pfropfgrundlage oder als Pfropfast genannten Verbindungen herstellen.

Im Rahmen einer bevorzugten Ausführungsform werden zur Herstellung der erfindungsgemäßen Bindemittel Pfropfpolymere eingesetzt, deren Anteil an funktionellen Gruppen X einen bestimmten Wert nicht übersteigt.

Wenn beispielsweise OH-Gruppen tragende Pfropfpolymere eingesetzt werden, so weisen die Pfropfpolymeren im Rahmen einer bevorzugten Ausführungsform der vorliegenden Erfindung eine OH-Zahl von höchstens etwa 80 mg KOH/g auf. Im Rahmen einer weiteren bevorzugten Ausführungsform der vorliegenden Erfindung werden Pfropfpolymere eingesetzt, die eine OH-Zahl von 50 mg KOH/g oder weniger, beispielsweise etwa 35 mg KOH/g oder weniger aufweisen.

Wenn das Pfropfpolymere als funktionelle Gruppe X eine SH-Gruppe, NH-Gruppe, Epoxygruppe, COOH-Gruppe, Anhydridgruppe oder NHR⁴-Gruppe aufweist, so gilt für die SH-, NH- Epoxy- oder COOH-Zahl entsprechendes.

Im Rahmen einer weiteren Ausführungsform der Erfindung wird die Konzentration der funktionellen Gruppen X derart gewählt, daß der Silangehalt der im erfindungsgemäßen Bindemittel oder in der erfindungsgemäßen Bindemittelzusammensetzung höchstens etwa 1,43 mmol Silan/g Polymer oder höchstens etwa 0.89 mmol Silan/g Polymer oder höchstens etwa 0,63 mmol Silan/g Polymer beträgt.

Im Rahmen einer weiteren bevorzugten Ausführungsform der vorliegenden Erfindung wird der Anteil der funktionellen Gruppen X am Pfropfpolymeren derart gewählt, daß der Anteil der Alkoxysilylgruppen am Alkoxysilylgruppen tragenden Pfropfpolymeren weniger als etwa 10 Gew.-%, insbesondere weniger als etwa 8 Gew.-% oder weniger als etwa 7 Gew.-% oder darunter, beispielsweise weniger als etwa 5 Gew.-% beträgt. Im Rahmen einer besonders bevorzugten Ausführungsform der vorliegenden Erfindung beträgt der Anteil an Alkoxysilylgruppen am Bindemittel etwa 4 Gew. % oder weniger, beispielsweise weniger als etwa 3 Gew.-% oder weniger als etwa 2 Gew.%.

Beispiele für im Rahmen der vorliegenden Erfindung zur Herstellung des Alkoxysilylgruppen tragenden Bindemittels einsetzbare und kommerziell erhältliche Polymere, die als funktionelle Gruppen X OH-Gruppen tragen, sind
die Arcol-Typen 1166, HS-100, 1266, 24-32, 31-28, 34-45, XL-1500, E-839, E-840, E-850, 1630 und R 2457 der Fa. Lyondell/Bayer;
die Voralux-Typen HN 350, HN 360, HN 370, HN 380, HF 505, HL 106, HL 109, HL 120, HL 108, HL 400 der Fa. Dow;
die Specflex-Typen NH 104, NH 123, NH 124, NC 603, NC 604, NC 606, NC 650 und NC 700 der Fa. Dow;
die Lupranol-Typen VP 9285, 4190-50 S, 4195-50, 4195-50 S, 4190-65, 4195-65, 4100, 4580-12, 4580-24, 4580-32, 4580-50, 4580-60, 4580-93, 4300, 4500 oder 4800 der Fa. Elastogran;
die Caradol-Typen SP 41-O1, MD 30-02, SP 37-01, SP 32-02, SP 43-03, SP 42-01, SP 38-04, SP 33-03 der Fa. Shell.

Die Herstellung der erfindungsgemäßen Bindemittel erfolgt beispielsweise durch Umsetzung der entsprechenden funktionellen Gruppen X tragenden Pfropfpolymeren mit Alkoxysilylverbindungen, die mindestens eine funktionelle Gruppe Y oder ein Wasserstoffatom aufweisen, welche mit der funktionellen Gruppe X des Pfropfpolymeren eine kovalente Bindung eingehen kann.

Geeignete funktionelle Gruppen Y sind beispielsweise die bereits als funktionelle Gruppe X genannten funktionellen Gruppen, wobei entsprechende Kombinationen von X und Y dahingehend vorliegen müssen, daß eine Reaktion zwischen X und Y unter Ausbildung einer kovalenten Bindung erfolgen kann. Wenn beispielsweise die funktionelle Gruppe X für OH-, SH-, NH₂- oder NHR₄- Gruppen steht, kann die funktionelle Gruppe Y beispielsweise für eine NCO-, Epoxy-, COOH- oder Anhydridgruppe stehen. Neben den bereits im Rahmen der Beschreibung der funktionellen Gruppe X genannten funktionellen Gruppen kann Y jedoch auch für Halogen, beispielsweise Cl oder Br stehen.

Im Rahmen einer weiteren Ausführungsform der vorliegenden Erfindung können Y und R₃ in der Alkoxysilylverbindung der allgemeinen Formel II zusammen für Wasserstoff stehen. Derartige Verbindungen lassen sich beispielsweise mit Pfropfgrundlagen umsetzen, die als Funktionelle Gruppen X Vinylgruppen aufweisen. Die Ausbildung der kovalenten Bindung zwischen Pfropfgrundlage und Verbindung der allgemeinen Formel II erfolgt dann durch den allgemein bekannten Mechanismus der Hydrosilylierung zwischen einem C-Atom der Vinylgruppe und dem das Wasserstoffatom tragenden Si Atom in der Verbindung der allgemeinen Formel II.

Eine im Rahmen der vorliegenden Erfindung einsetzbare Alkoxysilanverbindung der allgemeinen Formel II kann im Rahmen der vorliegenden Erfindung beispielsweise nur eine funktionelle Gruppe Y aufweisen. Es ist im Rahmen der vorliegenden Erfindung jedoch ebenso vorgesehen, daß eine Alkoxysilanverbindung der allgemeinen Formel II mehr als eine funktionelle Gruppe Y aufweist, beispielsweise 2 oder 3 funktionelle Gruppen Y.

Geeignete Alkoxysilanverbindungen der allgemeinen Formel II sind beispielsweise Cl-(CH₂)₃-Si(O-CH₂-CH₃)₃, Cl-CH(CH₃)-CH₂-Si(OCH₃)₃, Cl-(CH₂)₃-Si(O-CH₃)₃, Cl-CH₂-CH₂-O-CH₂-CH₂-Si(OCH₃), OCN-C₂H₄-N(CH₃)-(CH₂)₃-Si(O-CH₃)₃, OCN-(C₂H₄-O)₃-C₂H₄-N(CH₃)-(CH₂)₃-Si(O-C₄H₉)₃, Br-CH₂-C₆H₄-CH₂-CH₂-Si(O-CH₃)₃, Br-(CH₂)₃-Si(O-CH₃)₃, Cl-CH(C₂H₅)-CH₂-Si(OC₂H₅)₃, Cl-(CH₂)₃-Si(O-C₂H₅)₃, Br-(CH₂)₃Si(O-C₂H₅)3,, OCN-(CH₂)₃-Si(O-C₂H₅)₃, Cl-CH₂-CH₂-O-CH₂-Si(OC₂H₅)₃, (OCN-C₂H₄)₂-N-(CH₂)₃-Si(O-C₂H₅)₃ oder Cl-CH₂-C₆H₄-CH₂-CH₂-Si(O-C₂H₅)₃, OH-(CH₂)₃-Si(O-CH₂-CH₃)₃, OH-CH(CH₃)-CH₂-Si(OCH₃)₃, OH-(CH₂)₃-Si(O-CH₃)₃, OH-CH₂-CH₂-O-CH₂-CH₂-Si(OCH₃), OH-C₂H₄-N(CH₃)-(CH₂)₃-Si(O-CH₃)₃, OH-(C₂H₄-O)₃-C₂H₄-N(CH₃)-(CH₂)₃-Si(O-C₄H₉)₃, OH-CH₂-C₆H₄-CH₂-CH₂-Si(O-CH₃)₃, OH-(CH₂)₃-Si(O-CH₃)₃, OH-CH(C₂H₅)-CH₂-Si(OC₂H₅)₃, OH-(CH₂)₃-Si(O-C₂H₅)₃, OH-(CH₂)₃-Si(O-C₂H₅)₃, OH-(CH₂)₃-Si(O-C₂H₅)₃, OH-CH₂-CH₂-O-CH₂-Si(OC₂H₅)₃, (OH-C₂H₄)₂-N-(CH₂)₃-Si(O-CH₂)₃ oder OH-CH₂-C₆H₄-CH₂-CH₂-Si(O-C₂H₅)₃, H₂N-(CH₂)₃-Si(O-CH₂-CH₃)₃, H₂N-CH(CH₃)-CH₂-Si(OCH₃)₃, H₂N-(CH₂)₃-Si(O-CH₃)₃, H₂N-CH₂-CH₂-O-CH₂-CH₂-Si(OCH₃), H₂N-C₂H₄-N(CH₃)-(CH₂)₃-Si(O-CH₃)₃, H₂N-(C₂H₄-O)₃-C₂H-N(CH₃)-(CH₂)₃-Si(O-C₄H₉)₃, H₂N-CH₂-C₆H₄-CH₂-CH₂-Si(O-CH₃)₃, H₂N-(CH₂)₃-Si(O-CH₃)₃, H₂N-CH(C₂H₅)-CH₂-Si(OC₂H₅)₃, H₂N-(CH₂)₃-Si(O-C₂H₅)₃, H₂N-(CH₂)₃-Si(O-C₂H₅)₃, H₂N-(CH₂)₃-Si(O-C₂H₅)₃, H₂N-CH₂-CH₂-O-CH₂-Si(OC₂H₅)₃, (H₂N-C₂H₄)₂-N-(CH₂)₃-Si(O-C₂H₅)₃ oder H₂N-CH₂-C₆H₄-CH₂-CH₂-Si(O-C₂H₅)₃ oder Verbindungen, die an der entsprechenden Stelle beispielsweise eine Epoxy- oder Anhydridgruppe aufweisen wie (3-Triethoxysilylpropyl)succinanhydrid.

Ebenfalls geeignet sind entsprechende Alkoxysilanverbindungen der allgemeinen Formel II, die mehr als eine funktionelle Gruppe Y aufweisen. Beispielsweise OCN-CH₂-CH(NCO)-(CH₂)₃-Si(O-CH₂-CH₃)₃, OCN-CH-(CH₂NCO)-CH₂-Si(OCH₃)₃, Cl-CH₂-CH(Cl)-(CH₂)₃-Si(O-CH₂-CH₃)₃, Cl-CH-(CH₂Cl)-CH₂-Si(OCH₃)₃, Cl-CH₂-CH(Cl)-CH₂-CH₂-O-CH₂-CH₂-Si(OCH₃), (Cl-C₂H₄)₂N-(CH₂)₃-Si(O-CH₃)₃, Cl-CH(C₂H₄Cl)-CH₂-Si(OC₂H₅)₃ oder Verbindungen, die an der entsprechenden Stelle beispielsweise eine OH-, H₂N- Epoxy- oder Anhydridgruppe aufweisen.

Im Rahmen der vorliegenden Erfindung kann bei der Umsetzung mit den mindestens zwei funktionelle Gruppen X aufweisenden Pfropfpolymeren beispielsweise nur eine Alkoxysilanverbindung der allgemeinen Formel II vorliegen. Es ist jedoch erfindungsgemäß ebenso vorgesehen, daß die Umsetzung mit einem Gemisch aus zwei oder mehr Alkoxysilanverbindungen der allgemeinen Formel II durchgeführt wird.

Die Umsetzung eines mindestens zwei reaktive funktionelle Gruppen X aufweisenden Pfropfpolymeren mit einem entsprechenden Alkoxysilan der allgemeinen Formel II oder einem Gemisch aus zwei oder mehr davon wird, in Abhängigkeit von den miteinander reagierenden funktionellen Gruppen X und Y, unter Bedingungen durchgeführt, die dem Fachmann allgemein bekannt sind.

Im Rahmen einer bevorzugten Ausführungsform der vorliegenden Erfindung wird ein Pfropfpolymeres eingesetzt, das als funktionelle Gruppen X OH-Gruppen aufweist. Im Rahmen einer weiteren bevorzugten Ausführungsform der vorliegenden Erfindung wird eine Alkoxysilanverbindung der allgemeinen Formel II eingesetzt, die als funktionelle Gruppe Y ein Halogenatom oder eine NCO-Gruppe aufweist.

Zur Herstellung des erfindungsgemäßen Bindemittels eignet sich nicht ausschließlich der oben beschriebene Ansatz, grundsätzlich läßt sich das erfindungsgemäße Bindemittel auf verschiedene Arten herstellen. Im Rahmen einer weiteren bevorzugten Ausführungsform der vorliegenden Erfindung wird das erfindungsgemäße Bindemittel durch Umsetzung einer Pfropfgrundlage mit einem Gemisch aus zwei oder mehr olefinisch ungesättigten Monomeren unter radikalischen Bedingungen hergestellt, wobei mindestens eines der olefinisch ungesättigten Monomeren ein Alkoxysilylgruppe der allgemeinen Formel I aufweist.

Grundsätzlich sind bei dieser Verfahrensweise die bereits oben genannten Pfropfgrundlagen einsetzbar, wobei eine derartige Pfropfgrundlage nicht notwendigerweise über eine funktionelle Gruppe X verfügen muß sondern beispielsweise auch frei von funktionellen Gruppen X sein kann.

Zur Herstellung eines entsprechenden erfindungsgemäßen Bindemittels kann eine oben beschriebene Pfropfgrundlage mit einem Gemisch aus mindestens zwei olefinisch ungesättigten Monomeren unter Bedingungen umgesetzt werden, bei denen eine Pfropfung der Pfropfgrundlage mit dem Gemisch aus zwei oder mehrer olefinisch ungesättigten Monomeren stattfindet. In diesem Zusammenhang ist es erforderlich, daß mindestens eines der olefinisch ungesättigten Monomeren mindestens eine olefinisch ungesättigte Doppelbindung aufweist, die unter den herrschenden, radikalischen Bedingungen in mindestens einen Pfropfast eingebaut wird. Auf diese Weise ist es möglich, ein Alkoxysilylgruppen tragendes, erfindungsgemäßes Bindemittel herzustellen, das die Alkoxysilylgruppen im Pfropfast trägt.

Der Gehalt des erfindungsgemäßen Bindemittels an Alkoxysilylgruppen kann dabei in einer dem Fachmann bekannten Art und Weise durch die Konzentration der olefinisch ungesättigten, alkoxysilylgruppentragenden Verbindung eingestellt werden.

Geeignete Alkoxysilylgruppen tragende, olefinisch ungesättigte Verbindungen sind beispielsweise H₂C=CH-(CH₂)₃-Si(O-CH₂-CH₃)₃, H₂C=CH-CH(CH₃)-CH₂-Si(OCH₃)₃, H₂C=CH-(CH₂)₃-Si(O-CH₃)₃, H₂C=CH-CH₂-CH₂-O-CH₂-CH₂-Si(OCH₃), H₂C=CH-(C₂H₄-O)₃-C₂H₄-N(CH₃)-(CH₂)₃-Si(O-C₄H₉)₃, H₂C=CH-CH₂-C₆H₄-CH₂-CH₂-Si(O-CH₃)₃, H₂C=CH-(CH₂)₃-Si(O-CH₃)₃, H₂C=CH-CH(C₂H₅)-CH₂-Si(OC₂H₅)₃, H₂C=CH-(CH₂)₃-Si(O-C₂H₅)₃, H₂C=CH-(CH₂)₃-Si(O-C₂H₅)₃, H₂C=CH-(CH₂)₃-Si(O-C₂H₅)₃, H₂C=CH-CH₂-CH₂-O-CH₂-Si(OC₂H₅)₃, H₂C=CH-CH₂-C₆H₄-CH₂-CH₂-Si(O-C₂H₅)₂, H₂C=CH(CH₃)(-C=O)-O-(CH₂)₃-Si(OCH₃), H₂C=CH-Si(OCH₃) oder H₂C=CH-Si(OCH₂CH₃).

Die der vorliegenden Erfindung zugrunde liegenden Aufgaben werden außer durch ein erfindungsgemäßes Bindemittel auch durch eine erfindungsgemäße Bindemittelzusammensetzung gelöst.

Gegenstand der vorliegenden Erfindung ist daher auch eine Bindemittelzusammensetzung, mindestens enthaltend
a) ein Alkoxysilylgruppen tragendes Pfropfpolymeres erhältlich durch
   a1) Umsetzung eines mindestens zwei reaktive funktionelle Gruppen X aufweisenden Polymeren mit einer Alkoxysilanverbindung der allgemeinen Formel II

      Y-R₃-Si(R₁)ₘ(OR₂)₃₋ₘ (II),

      worin R₁ für einen linearen oder verzweigten Alkylrest mit 1 bis 6 C-Atomen, R₂ für einen linearen oder verzweigten Alkylrest mit 1 bis 6 C-Atomen, R₃ für einen linearen oder verzweigten Alkylrest mit 2 bis 24 C-Atomen, einen gegebenenfalls alkylsubstituierten Cycloalkylrest mit 4 bis 24 C-Atomen, einen gegebenenfalls substituierten Aralkylrest mit 6 bis 24 C-Atomen, einen Alkoxyrest mit 2 bis 10 C-Atomen, einen Polyoxyalkylenrest mit 4 bis 44 C-Atomen oder einen gegebenenfalls alkylsubstituierten Arylrest mit 6 bis 24 C-Atomen, m für eine ganze Zahl von 0 bis 2 und Y für mindestens eine funktionelle Gruppe, die mit der funktionellen Gruppe X unter Ausbildung einer kovalenten Bindung reagieren kann oder Y und R³ zusammen für Wasserstoff stehen,
   oder ein Gemisch aus zwei oder mehr solcher Polymeren, das dadurch gekennzeichnet ist, dass das mindestens zwei funktionelle Gruppen X tragende Polymere ein Polymeres ausgewählt aus der Gruppe bestehend aus Polyestern, Polyethern, Polyetherestern, Polyamiden, Polyurethanen, Polycarbonaten oder Polyvinylestern ist, und
b) mindestens ein weiteres Polymeres, das eine Alkoxysilylgruppe oder keine Alkoxysilylgruppe aufweist und dessen Erweichungspunkt 30 °C bis 250 °C (gemessen mit der Ring-und-Ball-Methode) beträgt, oder ein Gemisch aus zwei oder mehr solcher Polymeren.

Eine erfindungsgemäße Bindemittelzusammensetzung enthält als mindestens eine Komponente mindestens ein Alkoxysilylgruppen tragendes Polymeres. Ein entsprechendes Alkoxysilylgruppen tragendes Polymeres ist erhältlich durch Umsetzung eines mindestens zwei reaktive funktionelle Gruppen X aufweisenden Polymeren mit einer Alkoxysilanverbindung der allgemeinen Formel II.

Als mindestens zwei reaktive funktionelle Gruppen X tragendes Polymeres eignen sich die bereits im Rahmen dieses Textes beschriebenen, funktionelle Gruppen X tragenden Polymeren. Besonders geeignet sind beispielsweise die bereits im Rahmen dieses Textes als Pfropfgrundlage beschriebenen Polymeren, insbesondere Polyester, Polyetherester, Polyether und Polyurethane.

Für die funktionellen Gruppen X gelten ebenfalls die bereits im Rahmen des vorliegenden Textes genannten Bedingungen.

Ebenfalls als mindestens zwei reaktive funktionelle Gruppen X aufweisendes Polymeres sind die bereits im Rahmen dieses Textes beschriebenen Pfropfpolymere geeignet. Entsprechende, als Bestandteil der erfindungsgemäßen Bindemittelzusammensetzung einsetzbare Alkoxysilylgruppen tragende Polymere sind durch Umsetzung eines entsprechenden, mindestens zwei reaktive funktionelle Gruppen X aufweisenden Polymeren mit einer Alkoxysilanverbindung der allgemeinen Formel II erhältlich.

Als Alkoxysilanverbindung der allgemeinen Formel II eignen sich die bereits im Rahmen dieses Textes beschriebenen Alkoxysilanverbindungen.

Eine erfindungsgemäße Bindemittelzusammensetzung weist neben einem Alkoxysilylgruppen tragenden Polymeren oder einem Gemisch aus zwei oder mehr solcher Polymere noch mindestens ein weiteres Polymeres auf, das eine Alkoxysilylgruppe oder keine Alkoxysilylgruppe aufweist, oder ein Gemisch aus zwei oder mehr solcher Polymeren.

Als weiteres Polymeres sind beispielsweise Polymere auf Basis ungesättigter Monomere geeignet, beispielsweise Olefine wie Ethylen, Propylen, Buten, Butadien Cyclopenten Norbornen Dicyclopentadien oder Butylen, substituierte Olefine wie z.B. Vinylchlorid, Vinylidenchlorid, Chloropren, oder Stryol, Acryl- und Methacrylsäureester wie Butylacrylat, Methylmethacrylat und Vinylester wie z.B. Vinylacetat oder Vinylbutyrat. Als weitere Beispiele seine Acrylnitril oder Dibutylmaleinat genannt. Co- und Terpolymere, Blockpolymere und Pfropfcopolymere der genannten Monomere können ebenfalls verwendet werden.

Als Beispiele für derartige Polymere seien genannt: Polyethylen, Polypropylen, Polyisobutylen, Polybuten-1, Poly-4-methylpenten-1, Polyisopren, Polybutadien, Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Vinylacetat-Copolymere, Ethylen-Acrylsäure-Copolymere, Terpolymere von Ethylen mit Propylen und einem Dien wie Hexadien, Dicyclopentadien oder Ethylidennorbornen; Polystyrol, Poly-(p-methylstyrol), Poly-(α-methylstyrol), Styrol-Butadien-Copolymere, Styrol-Acrylnitril-Copolymere, Styrol-Alkylmethacrylat-Copolymere, Styrol-Butadien-Alkylacrylat und -methacrylat-Terpolymere, Styrol-Maleinsäureanhydrid-Copolymere, Styrol-Acrylnitril-Methylacrylat-Terpolymere; Styrol-Butadien-Styrol-Blockcopolymere (SBS), Styrol-Isopren-Styrol-Blockcopolymere, Styrol-Ethylen/Butylen-Styrol-Blockcopolymere oder Styrol-Ethylen/Propylen-Styrol-Blockcopolymere.

Pfropfcopolymere von Styrol oder α-Methylstyrol, wie z.B. Styrol auf Polybutadien, Styrol auf Polybutadien-Styrol- oder Polybutadien-Acrylnitril Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien Copolymeren. Polychloropren, Chlorkautschuk, chloriertes oder chlorsulfoniertes Polyethylen, Polyvinylchlorid, Polyvinylidenchlorid, Polyvinylfluorid, Polyvinylidenfluorid; Vinylchlorid-Vinylidenchlorid-Copolymer, Vinylchlorid-Vinylacetat-Copolymer, Vinylidenchlorid-Vinylacetat-Copolymer, Polyacrylate und Polymethacrylate, Polymethylmethacrylate, Polyacrylamide und Polyacrylnitrile, Acrylnitril-Butadien-Copolymere, Acrylnitril-Alkylacrylat-Copolymere, Acrlynitril-Alkoxyalkylacrylat-Copolymere, Acrylnitril-Vinylhalogenid-Copolymere, Acrylnitril-Alkylmethacrylat-Butadien Terpolymere, Polyvinylalkohol mit einem Verseifungsgrad von bis zu etwa 100 %, gegebenenfalls teilverseiftes Polyvinylacetat, Polyvinylstearat, Polyvinylbenzoat, Polyvinylmaleat, Polyvinylbutyral, Polyallyphthalat, Polyallylmelamin.

Gemische aus zwei oder mehr der genannten Polymeren (Polymerblends) können ebenfalls eingesetzt werden.

Die genannten weiteren Polymeren weisen vorzugsweise Molekulargewicht von 2000 g/mol bis maximal etwa 10.000.000 g/mol und einen Erweichungspunkt von 30 °C bis 250 °C, vorzugsweise 50 °C bis 200 °C und insbesondere 70 °C bis 150 °C auf (gemessen mit der Ring-und-Ball-Methode).

Ebenfalls zum Einsatz als weitere Polymere geeignet sind Polykondensate.

Unter Polykondensaten sind Polymere zu verstehen, die durch Reaktion von Polycarbonsäuren mit Polynucleophilen wie Polyaminen oder Polyolen unter Abspaltung von Wasser oder Alkoholen erhalten werden können. Als Beispiele seien genannt: Polyester wie z.B. Polyethylenterephthalat, Polybutylenterephthalat, Polyethylennaphthylat, Poly-1,4-dimethylolcyclohexanterephthalat, Polyhydroxybenzoate, Polyamide wie z.B. Polyamid 4, Polyamid 6, Polyamid 6/6, 6/10, 6/9, 6/12, 4/6, 12/12, Polyamid 11, Polyamid 12, Poly(2,4,4-trimethylhexamethylenterephthalamid) oder Poly-m-phenylen-isophthalamid, Polycarbonate, Polyestercarbonate und Alkydharze, insbesondere die bereits im Rahmen dieses Textes beschriebenen Polykondensate.

Ebenfalls als weiteres Polymeres geeignet sind Polyurethane, wie sie bereits im Rahmen dieses Textes beschrieben wurden.

Eine erfindungsgemäße Bindungsmittelzusammensetzung kann jeweils nur eine alkoxysilylgruppentragendes Polymeres und ein weiteres Polymeres enthalten. Es ist jedoch im Rahmen der vorliegenden Erfindung ebenso vorgesehen, daß eine erfindungsgemäße Bindemittelzusammensetzung ein Gemisch aus zwei oder mehr Alkoxysilylgruppen tragenden Polymeren und mindestens einem weiteren Polymeren oder ein Gemisch aus zwei oder mehr Alkoxysilylgruppen tragenden Polymeren und einem Gemisch aus zwei oder mehr weiteren Polymeren oder ein Alkoxysilylgruppen tragendes Polymeres und ein Gemisch aus zwei oder mehr weiteren Polymeren aufweist.

Im Rahmen einer bevorzugten Ausführungsform enthält die erfindungsgemäße Bindemittelzusammensetzung das Alkoxysilylgruppen tragende Polymere oder das Gemisch aus Alkoxysilylgruppen tragenden Polymeren und das weitere Polymere oder das Gemisch aus zwei oder mehr weiteren Polymeren in jeweiligen Anteilen, die gewährleisten, daß der Anteil an Alkoxysilylgruppen in der erfindungsgemäßen Bindemittelzusammensetzung, bezogen auf das Gemisch aus Alkoxysilylgruppen tragenden Polymeren und weiteren Polymeren, höchstens etwa 10 Gew.-%, vorzugsweise jedoch weniger, beispielsweise höchstens etwa 9 Gew.-%, 8 Gew.%, 7 Gew.-%, 6 Gew.-% oder höchstens etwa 5 Gew.-% beträgt. Im Rahmen einer weiteren bevorzugten Ausführungsform liegt der Anteil an Alkoxysilylgruppen sogar darunter, beispielsweise bei weniger als 4 Gew.-%, weniger als 3 Gew.-% oder weniger als 2 Gew.-%.

Die Herstellung der erfindungsgemäßen Bindemittel kann grundsätzlich auf jede dem Fachmann bekannte Art erfolgen. Im Rahmen einer bevorzugten Ausführungsform der vorliegenden Erfindung werden die erfindungsgemäßen Bindemittel jedoch durch ein ein- oder mehrstufiges Verfahren, bei dem ein mindestens zwei reaktive funktionelle Gruppen X aufweisendes Pfropfpolymeres beteiligt ist, hergestellt.

Gegenstand der vorliegenden Erfindung ist daher ist auch ein- oder mehrstufiges Verfahren zur Herstellung eines erfindungsgemäßen Bindemittels bei dem in mindestens einer Stufe ein mindestens zwei reaktive funktionelle Gruppen X aufweisendes Pfropfpolymeres mit einer Alkoxysilanverbindung der allgemeinen Formel II

Y-R₃-Si(R₁)ₘ(OR₂)₃₋ₘ (II),

worin R₁ für einen linearen oder verzweigten Alkylrest mit 1 bis 6 C-Atomen, R₂ für einen linearen oder verzweigten Alkylrest mit 1 bis 6 C-Atomen, R₃ für einen linearen oder verzweigten Alkylrest mit 2 bis 24 C-Atomen, einen gegebenenfalls alkylsubstituierten Cycloalkylrest mit 4 bis 24 C-Atomen, einen gegebenenfalls substituierten Aralkylrest mit 6 bis 24 C-Atomen, einen Alkoxyrest mit 2 bis 10 C-Atomen, einen Polyoxyalkylenrest mit 4 bis 44 C-Atomen oder einen gegebenenfalls alkylsubstituierten Arylrest mit 6 bis 24 C-Atomen, m für eine ganze Zahl von 0 bis 2 und Y für mindestens eine funktionelle Gruppe, die mit der funktionellen Gruppe X unter Ausbildung einer kovalenten Bindung reagieren kann, oder Y und R³ zusammen für Wasserstoff stehen, unter Ausbildung einer kovalenten Bindung zwischen X und Y oder X und Si umgesetzt wird.

Ein erfindungsgemäßes Bindemittel kann darüber hinaus auch ohne Beteiligung von Polymeren mit funktionellen Gruppen X hergestellt werden.

Gegenstand der vorliegenden Erfindung ist daher auch ein- oder mehrstufiges Verfahren zur Herstellung eines erfindungsgemäßen Bindemittels, bei dem in mindestens einer Stufe eine Pfropfgrundlage mit einem Gemisch aus zwei oder mehr olefinisch ungesättigten Monomeren unter radikalischen Bedingungen umgesetzt wird, wobei mindestens eines der olefinisch ungesättigten Monomeren eine Alkoxysilylgruppe der allgemeinen Formel I

-Si(R₁)ₘ(OR₂)₃₋ₘ (I),

worin R₁ für einen linearen oder verzweigten Alkylrest mit 1 bis 6 C-Atomen, R₂ für einen linearen oder verzweigten Alkylrest mit 1 bis 6 C-Atomen und m für eine ganze Zahl von 0 bis 2 steht, aufweist.

Ein weiterer Gegenstand der vorliegenden Erfindung ist auch ein- oder mehrstufiges Verfahren zur Herstellung einer erfindungsgemäßen Bindemittelzusammensetzung wobei das Verfahren mindestens eine der folgenden Verfahrensstufen aufweist:
(i) ein mindestens zwei reaktive funktionelle Gruppen X aufweisendes Polymeres wird mit einer Alkoxysilanverbindung der allgemeinen Formel II

   Y-R₃-Si(R₁)ₘ(OP₂)₃₋ₘ (II),

   worin R₁, R₂, R₃, m und Y die oben genannte Bedeutung aufweisen, unter Ausbildung einer kovalenten Bindung zwischen X und Y umgesetzt und anschließend mit einem Polymerisat, erhältlich durch radikalische Polymerisation eines Monomeren mit mindestens einer olefinisch ungesättigten Doppelbindung oder eines Gemischs aus zwei oder mehr solcher Monomeren oder einem Gemisch aus zwei oder mehr solcher Polymerisate vermischt oder
(ii) ein mindestens zwei reaktive funktionelle Gruppen X aufweisendes Polymeres wird mit einem Polymerisat, erhältlich durch radikalische Polymerisation eines Monomeren mit mindestens einer olefinisch ungesättigten Doppelbindung oder eines Gemischs aus zwei oder mehr solcher Monomeren oder einem Gemisch aus zwei oder mehr solcher Polymerisate vermischt und anschließend mit einer Alkoxysilanverbindung der allgemeinen Formel II

   Y-R₃-Si(R₁)ₘ(OR₂)₃₋ₘ (II),

   worin R₁, R₂, R₃, m und Y die oben genannte Bedeutung aufweisen, unter Ausbildung einer kovalenten Bindung zwischen X und Y umgesetzt oder
(iii) mindestens eine radikalische Polymerisation eines Monomeren mit mindestens einer olefinisch ungesättigten Doppelbindung oder eines Gemischs aus zwei oder mehr solcher Monomeren zu einem Polymerisat wird in Gegenwart mindestens eines zwei reaktive funktionelle Gruppen X aufweisenden Polymeren durchgeführt und das Gemisch aus Polymerisat und Polymerem anschließend mit einer Alkoxysilanverbindung der allgemeinen Formel II

   Y-R₃-Si(R₁)ₘ(OR₂)₃₋ₘ (II),

   worin R₁, R₂, R₃, m und Y die oben genannte Bedeutung aufweisen, unter Ausbildung einer kovalenten Bindung zwischen X und Y oder X und Si umgesetzt oder
(iv) mindestens eine radikalische Polymerisation eines Monomeren mit mindestens einer olefinisch ungesättigten Doppelbindung oder eines Gemischs aus zwei oder mehr solcher Monomeren zu einem Polymerisat wird in Gegenwart mindestens eines Umsetzungsprodukts eines mindestens zwei reaktive funktionelle Gruppen X aufweisenden Polymeren mit einer Alkoxysilanverbindung der allgemeinen Formel II

   Y-R₃-Si(R₁)ₘ(OR₂)₃₋ₘ (II),

   worin R₁, R₂, R₃, m und Y die oben genannte Bedeutung aufweisen, unter Ausbildung einer kovalenten Bindung zwischen X und Y oder X und Si, durchgeführt.

Die erfindungsgemäßen Bindemittel oder die erfindungsgemäßen Bindemittelzusammensetzungen können neben den bereits oben genannten Bestandteilen noch weitere Zusatzstoffe enthalten. Geeignete Zusatzstoffe sind beispielsweise Flammschutzmittel, Zellregulantien, Stabilisatoren, Lichtschutzmittel, Weichmacher, Stellmittel zur Einstellung der Viskosität oder anderer wichtiger Eigenschaften wie Katalysatoren. Derartige Zusatzstoffe sind in der Regel gegenüber den im erfindungsgemäßen Bindemittel vorliegenden, reaktiven Gruppen inert.

Als Weichmacher werden beispielsweise Weichmacher auf Basis von Phthalsäure eingesetzt, insbesondere Dialkylphthalate, wobei als Weichmacher Phthalsäureester bevorzugt sind, die mit einem etwa 6 bis etwa 12 Kohlenstoffatomen aufweisenden, linearen Alkanol verestert wurden. Besonders bevorzugt ist hierbei das Dioctylphthalat.

Ebenfalls als Weichmacher geeignet sind Benzoatweichmacher, beispielsweise Sucrosebenzoat, Diethylenglykoldibenzoat und/oder Diethylenglykolbenzoat, bei dem etwa 50 bis etwa 95% aller Hydroxylgruppen verestert worden sind, Phosphat-Weichmacher, beispielsweise t-Butylphenyldiphenylphosphat, Polyethylenglykole und deren Derivate, beispielsweise Diphenylether von Poly(ethylenglykol), flüssige Harzderivate, beispielsweise der Methylester von hydriertem Harz, pflanzliche und tierische Öle, beispielsweise Glycerinester von Fettsäuren und deren Polymerisationsprodukte.

Zu den im Rahmen der Erfindung als Zusatzstoffe einsetzbaren Stabilisatoren oder Antioxidantien, zählen sterisch gehinderte Phenole hohen Molekulargewichts (Mₙ), polyfunktionelle Phenole und schwefel- und phosphorhaltige Phenole. Im Rahmen der Erfindung als Zusatzstoffe einsetzbare Phenole sind beispielsweise 1,3,5-Trimethyl-2,4,6-tris(3,5-di-tert-butyl-4-hydroxybenzyl)benzol; Pentaerythrittetrakis-3-(3,5-di-tert-butyl-4-hydroxyphenyl)propionat; n-Octa-decyl-3,5-di-tert-butyl-4-hydroxyphenyl)propionat; 4,4-Methylenbis(2,6-di-tert-butylphenol); 4,4-Thiobis(6-tert-butyl-o-cresol); 2,6-Di-tert-butylphenol; 6-(4-Hydroxyphenoxy)-2,4-bis(n-octyl-thio)-1,3,5-triazin; Di-n-Octadecyl-3,5-di-tert-butyl-4-hydroxybenzylphosphonate; 2-(n-Octylthio)ethyl-3,5-di-tert-butyl-4-hydroxybenzoat; und Sorbithexa[3-(3,5-di-tert-butyl-4-hydroxyphenyl)propionat].

Als Photostabilisatoren sind beispielsweise diejenigen geeignet, die unter dem Namen Thinuvin® (Hersteller: Ciba Geigy) im Handel erhältlich sind.

Weitere Zusatzstoffe können in die erfindungsgemäßen Bindemittelzusammensetzungen mit aufgenommen werden um bestimmte Eigenschaften zu variieren. Darunter können beispielsweise Farbstoffe wie Titandioxid, Füllstoffe wie Talkum, Ton und dergleichen sein. Gegebenenfalls können in den erfindungsgemäßen Bindemittelzusammensetzungen geringe Mengen an thermoplastischen Polymeren oder Copolymeren vorliegen, beispielsweise Ethylenvinylacetat (EVA), Ethylenacrylsäure, Ethylenmethacrylat und Ethylen-n-butylacrylatcopolymere, die der Bindemittelzusammensetzung gegebenenfalls zusätzliche Flexibilität, Zähigkeit und Stärke verleihen. Es ist ebenfalls möglich bestimmte hydrophile Polymere zuzugeben, beispielsweise Polyvinylalkohol, Hydroxyethylcellulose, Hydroxypropylcellulose, Polyvinylmethylether, Polyethylenoxid, Polyvinylpyrrolidon, Polyethyloxazoline oder Stärke oder Celluloseester, beispielsweise die Acetate mit einem Substitutionsgrad von weniger als 2,5.

Eine erfindungsgemäße Bindemittelzusammensetzung kann beispielsweise Zusatzstoffe enthalten, die eine Modifizierung der Klebeigenschaften eines aus einer erfindungsgemä-ßen Bindemittelzusammensetzung hergestellten Klebstoffs erlauben. Hierzu sind beispielsweise die sogenannten Tackifier-Harze geeignet, die sich in natürliche Harze und synthetische Harze (Kunstharze) unterteilen lassen. Geeignete Tackifier-Harze sind beispielsweise Alkydharze, Epoxidharze, Melaminharze, Phenolharze, Urethanharze, Kohlenwasserstoffharze sowie natürliche Harze wie Kolophonium, Holzterpentinöl und Tallöl. Als synthetische Kohlenwasserstoffharze sind beispielsweise Ketonharze, Cumaron-Indenharze, Isocyanatharze und Terpen-Phenolharze geeignet. Im Rahmen der vorliegenden Erfindung ist der Einsatz von synthetischen Harzen bevorzugt.

Als Flammschutzmittel kommen beispielsweise übliche phosphorhaltige Verbindungen, insbesondere elementarer Phosphor, Phosphate oder Phosphonate in Frage, beispielsweise Triethylphosphat oder Trichlorpropylphosphat. Derartige Verbindungen können gleichzeitig weichmachende und viskositätsregulierende Eigenschaften aufweisen. Weitere geeignete Flammschutzmittel sind beispielsweise Diphenylkresylphosphate, Triphenylphosphat, Dimethylmethanphosphonat und dergleichen. Darüber hinaus können als Flammschutz auch Chlorparaffine eingesetzt werden. Ebenso geeignet sind halogenierte Polyester- oder Polyetherpolyole, beispielsweise handelsübliches bromiertes Polyetherpolyol. Derartige halogenierte Polyester- und Polyetherpolyole können beispielsweise in die im erfindungsgemäßen Bindemittel oder in der erfindungsgemäßen Bindemittelzusammensetzung vorliegenden Polymeren eingebaut sein.

Als Zellregulantien werden üblicherweise Verbindungen auf Silikonbasis eingesetzt. Im Rahmen einer bevorzugten Ausführungsform der Erfindung werden als Zellregulans insbesondere vernetzungsfähiges, flüssiges Polybutadien, Silikonöle oder Paraffinöle eingesetzt. Als Stabilisatoren werden im Rahmen einer bevorzugten Ausführungsform der vorliegenden Erfindung handelsübliche Silikonstabilisatoren eingesetzt.

Zur Erhöhung der Lagerstabilität der erfindungsgemäßen Bindemittel oder der erfindungsgemäßen Bindemittelzusammensetzung kann es zweckmäßig sein, reaktive Silane zuzusetzen. Geeignete reaktive Silane sind beispielsweise Tetramethoxysilan, Tetraethoxysilan, Trimethoxymethylsilan oder Trimethoxyvinylsilan, die geeignet sind, Wasser abzufangen. Der Gehalt eines erfindungsgemäßen Bindemittels oder einer erfindungsgemäßen Bindemittelzusammensetzung derartige Verbindungen beträgt weniger als 3 Gew.-%, bezogen auf den Polymergehalt der Bindemittel oder Bindemittelzusammensetzung.

Ein erfindungsgemäßes Bindemittel oder eine erfindungsgemäße Bindemittelzusammensetzung kann zur Förderung der Vernetzung ggf. einen Katalysator oder ein Gemisch aus zwei oder mehr Katalysatoren enthalten. Als Katalysatoren kommen insbesondere Aminverbindungen in Frage, beispielsweise Triethylendiamin, Trimethylaminoethylpiperazin, Pentamethyldiethylentriamin, Tetramethyliminobisopropylamin und Bis(dimethylaminopropyl)-N-isopropanolamin sowie Dimorpholinodienthylether. Weitere geeignete Katalysatoren sind solche auf Basis von organischen oder anorganischen Schwermetallverbindungen, wie beispielsweise Kobaltnaphthenat, Dibutylzinndilaurat, Zinnmercaptide, Zinndichlorid, Zirkontetraoctoat, Antimondioctoat, Bleidioctoat, Metall-, insbesondere Eisenacetylacetonat. Insbesondere kommen alle für die Beschleunigung der Silanol-Kondensation bekannten Katalysatoren in Frage. Beispielsweise sind dies Organozinn- Organotitan-, Organozirkon- oder Organoaluminiumverbindungen. Beispiele für derartige. Verbindungen sind Dibutylzinndilaurat, Dibutylzinndimaleat, Zinnoctoat, Isopropyltrüsostearoyltitanat, Isopropyltris(dioctylpyrophosphat)titanat, Bis(dioctylpyrophosphat)oxyacetattitanat, Tetrabutylzirconat, Tetrakis(acetylacetonato)zirkonium, Tetraisobutylzirkonat, Butoxytris(acetylacetonato)zirkonium, Tris(ethylacetoacetato)aluminium. Dibutylzinnalkylester wie Dibutylzinnalkylinaleate oder Dibutylzinnlaurate sind besonders geeignet, insbesondere Dibutylzinnbisethylmaleat, Dibutylzinnbisbutylmaleat, Dibutylzinnbisoctyhnaleat, Dibutylzinnbisoleylmaleat, Dibutylzinnbisacetylacetat, Dibutylzinndiacetat, Dibutylzinndioctoat, Dibutylzinnoxid, Dibutylzinnbistriethoxysilikat und deren katalytisch wirksame Derivate. Die genannten Katalysatoren können alleine oder als Gemisch aus zwei oder mehr der genannten Katalysatoren eingesetzt werden.

Ebenfalls als Katalysatoren geeignet sind Aminoverbindungen, die eine Alkoxysilylgruppe tragen, beispielsweise 3-Aminopropyltromethoxysilan.

Darüber hinaus sind beispielsweise die Katalysatoren geeignet, die bereits im Rahmen dieses Textes bei der Herstellung der Polyurethane beschrieben wurden.

Die erfindungsgemäßen Bindemittel und Bindemittelzusammensetzungen eigen sich besonders zur Herstellung von Schäumen. Gegenstand der vorliegenden Erfindung ist daher auch eine schaumerzeugende Zusammensetzung, mindestens enthaltend ein erfindungsgemäßes Bindemittel oder eine erfindungsgemäße Bindemittelzusanunensetzung oder ein gemäß einem erfindungsgemäßen Verfahren hergestelltes Bindemittel oder eine gemäß einem erfindungsgemäßen Verfahren hergestellte Bindemittelzusammensetzung und ein Treibmittel.

Wenn die erfindungsgemäßen Bindemittel oder Bindemittelzusammensetzungen zur Erzeugung von Schäumen eingesetzt werden sollen, so werden sie zweckmäßigerweise in Druckdosen (Aerosoldosen) dem Anwender zugeführt. Zur Ausbringung der erfindungsgemäßen Bindemittel- oder Bindemittelzusammensetzungen aus den Aerosoldosen enthält eine erfindungsgemäße schaumerzeugende Zusammensetzung neben den entsprechenden erfindungsgemäßen Bindemitteln oder Bindemittelzusammensetzungen noch mindestens ein Treibmittel. Geeignete Treibmittel sind beispielsweise niedrig siedende Fluorkohlenwasserstoffe, Kohlenwasserstoffe und/oder Ether. Besonders bevorzugt sind die Fluorkohlenwasserstoffe R124, R125, R134a, R142b, R143 und R152a, R227, die reinen Kohlenwasserstoffe Propan, Butan und Isobutan sowie Dimethylether. Weiterhin können CO₂, N₂O oder N₂ als Treibmittel zugegen sein. Beliebige Kombinationen dieser Gase sind möglich. Bei Druckdosenformulierungen sind Treibgasgehalte von 5 bis 40 Gew.-%, insbesondere 5 bis 20 Gew.-%, bezogen auf die gesamte Präpolymerabmischung, bevorzugt. Der Gehalt an unter den herrschenden Druckbedingungen nicht kondensierbaren Gasen sollte so bemessen sein, daß das auf den Leerraum des Druckbehälters bezogene Volumen einen Druck von etwa 8 bis 10 bar ergibt, je nach der einschlägigen nationalen Vorschrift für Druckbehälter (Aerosoldosen). Da bei der Vernetzung kein CO₂ freigesetzt wird, muß genügend Treibgas sowohl für die Ausbringung als auch für die Verschäumung vorhanden sein.

Die erfindungsgemäße, schaumerzeugende Zusammensetzung eignet sich beispielsweise zur Herstellung eines Polymerschaums.

Gegenstand der vorliegenden Erfindung ist daher auch ein Polymerschaum, herstellbar unter Verwendung eines erfindungsgemäßen Bindemittels oder einer erfindungsgemäßen Bindemittelzusammensetzung oder eines nach einem erfindungsgemäßen Verfahren hergestellten Bindemittels oder einer nach einem erfindungsgemäßen Verfahren hergestellten Bindemittelzusammensetzung.

Die erfindungsgemäßen Schäume könne beispielsweise als 1K oder als 2K-Schäume vorliegen.

Die Schaumausbeute kann gegebenenfalls beispielsweise dadurch gesteigert werden, daß dem erfindungsgemäßen Bindemittel Silane zugesetzt werden. Diese reagieren und Vernetzen dann unter Einwirkung von Feuchtigkeit unter Wasserstoffentwicklung.

Weiterhin eignen sich die erfindungsgemäßen Bindemittel und Bindemittelzusammensetzungen zur Herstellung von Oberflächenbeschichtungsmitteln, insbesondere zur Herstellung von Lacken oder Klebstoffen. Gegenstand der vorliegenden Erfindung ist daher auch ein Oberflächenbeschichtungsmittel, insbesondere ein Lack oder ein Klebstoff, herstellbar unter Verwendung eines erfindungsgemäßen Bindemittels oder einer erfindungsgemäßen Bindemittelzusammensetzung oder eines nach einem erfindungsgemäßen Verfahren hergestellten Bindemittels oder einer nach einem erfindungsgemäßen Verfahren hergestellten Bindemittelzusammensetzung.

Weiterhin Gegenstand der vorliegenden Erfindung ist die Verwendung eines erfindungsgemäßen Bindemittels oder einer erfindungsgemäßen Bindemittelzusammensetzung oder eines nach einem erfindungsgemäßen Verfahren herstellbaren Bindemittels oder einer nach einem erfindungsgemäßen Verfahren herstellbaren Bindemittelzusammensetzung als Additiv in Oberflächenbeschichtungsmitteln, Schäumen oder Klebstoffen.

Die Erfindung wird nachfolgend durch Beispiele näher erläutert.

### Beispiele

### Beispiel 1: Herstellung eines alkoxysilylgruppentragenden Pfropfpolymeren

151 g eines mit Styrol/Acrynitril im Verhältnis 95:5 gepfropften Polypropylenglykols (OH-Zahl 16) wurden mit 0,11 g Dibutylzinndilaurat in einen Dreihalskolben eingewogen und unter Stickstoffatmosphäre und ständigem Rühren auf 80°C erwärmt. Anschließend wurden 7,9 g 2,4-Toluylendiisocyanat (TDI) zugegeben, was mit einem Temperaturanstieg auf 100°C verbunden war. Anschließend wurde noch für ca. 1 Stunde bei 95°C gerührt. Der NCO-Gehalt betrug 0,9 %. In dieses isocyanatgruppenhaltige Präpolymere wurden anschließend 22 g 3,4,5,6-Tetrabromophthalsäure-2(2-hydroxyethoxy)ethyl-2-hydroxypropylester OH-Zahl 220) eingerührt. Die Reaktionsmischung wurde anschlie-ßend für 2 Stunden unter Rühren bei 90°C gehalten. Schließlich wurden dem Reaktionsgemisch 11,6 g 3-Isocyanatopropyltrimethoxysilan zugegeben und weitere 2 Stunden bei 100°C gerührt.

Man erhielt ein hochviskoses Polymeres. Das Polymere wurde mit 2% eines Stabilisators (OS50, Fa. Bayer) und 0,3% Neostann U220 (Dibutylzindiacetylzinacetonat, Fa. Kaneka) vermischt und verschäumt. Es entstand ein hart-elastischer Schaum.

### Beispiel 2: Herstellung eines Alkoxysilylgruppen tragenden Pfropfpolymeren

1400 g eines Methylstyrol/Acrylnitril gepfropten Polypropylenglycols (OH-20) wurden mit 0,35 g Ditbutylzinndilaurat in einen Dreihalskolben eingewogen und auf 70 °C erwärmt. Anschließend wurden 117 g 3-Isocyanatopropyltrimethoxysilan zugegeben und für eine weitere Stunde gerührt.

Man erhielt eine weiße, viskose Flüssigkeit.

### Beispiel 3: Herstellung eines Films

Zu einem Teil des Produkts aus Beispiel 2 wurden 0,25 Gew.-% Dibutylzinndiacetonat zugegeben und aus dem so erhaltenen Gemisch wurde ein 2 mm starker Film gegossen. Eine Durchhärtung fand innerhalb von 24 Stunden statt. Der erhaltene Film wies nach einer Lagerung von 14 Tagen eine Zugfestigkeit von 2,07 N/mn² und einer Reißdehnung von 200 % auf.

### Beispiel 4: Herstellung eines Schaums

Das gemäß Beispiel 2 hergestellte Alkoxysilylgruppen tragende Polymere wurde darüber hinaus zu einem Schaum verarbeitet. Hierzu wurden 81,6 Gew.-% des Polymeren mit 3,0 Gew.-% PC-Stab EP 19 (Fa. Nitriol) 0,3 Gew.-% Neostan U 220, 1,0 Gew.-% Baysilonöl M 100 (Fa. Bayer) und 15 Gew.-% eines Gemisches aus Propan und Butan vermischt und aufgeschäumt. Die Hautbildungszeit des so erhaltenen Schaums betrug etwa 10 Minuten, die Durchhärtezeit ca. 1 Stunde. Die Schaumdichte betrug etwa 50 g/l. Der ausgehärtete Schaum war hart-elastisch.

Bei einem weiteren Schäumversuch wurden neben den bereits oben genannten Bestandteilen noch 2 Gew.-% Vinyltrimethoxysilan zugegeben. Der so erhaltene Schaum hatte identische Eigenschaften, die Haftung auf porösen Substraten, Stein oder Beton war jedoch deutlich verbessert.

### Beispiel 5: Herstellung eines Schaums

58,8 g eines Polypropylenglykols (OH-Zahl 56) wurden mit 41,2 g eines Polyvinylacetat-Homopolymeren¹ (Mₙ > 1.000.000) zu einer homogenen Paste vermischt. Anschließend wurden nacheinander 0,8 g Dibutylzinndilaurat, 1,0 g Dibutylzinndiacetylacetonat, 0,15 g Baysilonöl M 100 (Silikonöl, Hersteller. Bayer AG), 1,0 g pyrogene Kieselsäure, 4,0 g Tegostab B 1048 (Hersteller: Fa Goldschmidt) und 14,0 g Isocyanatopropyltrimethoxysilan eingerührt. Die so erhaltene Mischung wurde in einer Aerosoldose mit 17,5 g eines Gemischs aus Propan und Butan vermischt und ausgetragen. Der nach dem Austrag entstehende, hartelastische Schaum wies eine Hautbildungszeit von 20 Minuten und eine Durchhärtezeit von etwa 6 Stunden auf.
¹: Spezifikation:

| | | |
|---|---|---|
| Sieblinie (Normalsieb): | | |
| | > 0,4 mm | max. 5 % |
| | > 0,2 mm | 5-15% |
| | > 0,1 mm | 50 - 70% |
| | < 0,1 mm | max. 35 % |
| Schüttgewicht: | | 400 - 700 g/l (DIN/ISO 697) |
| Asche: | | max. 1% 2h, 1000 °C |

## Patentansprüche

1. Bindemittel, mindestens enthaltend ein mindestens zwei Alkoxysilylgruppen der allgemeinen Formel I
-Si(R₁)ₘ(OR₂)₃₋ₘ (I),
worin R₁ für einen linearen oder verzweigten Alkylrest mit 1 bis 6 C-Atomen, R₂ für einen linearen oder verzweigten Alkylrest mit 1 bis 6 C-Atomen und m für eine ganze Zahl von 0 bis 2 steht, tragendes Pfropfpolymeres mit durch radikalische oder ionische Polymerisation auf einer Pfropfgrundlage initiierten Pfropfästen bzw. Pfropfzweigen, wobei als Pfropfgrundlage Polyester, Polyether, Polyetherester, Polyamide, Polyurethane, Polyesterurethane, Polyetherurethane, Polyetheresterurethane, Polyamidurethane, Polyharnstoffe, Polyamine, Polycarbonate, Polyvinylester oder Polymere, die im Polymerrückgrat ein Gemisch aus zwei oder mehr der genannten Polymergruppen aufweisen, eingesetzt werden, und das Pfropfpolymere mindestens 0,5 Gew.-%, bezogen auf die Pfropfgrundlage, an Pfropfästen bzw. Pfropfzweigen aufweist.

2. Bindemittel nach Anspruch 1, **dadurch gekennzeichnet, daß** das Pfropfpolymere durch Umsetzung eines mindestens 2 reaktive funktionelle Gruppen X aufweisenden Pfropfpolymeren mit einer Alkoxysilanverbindung der allgemeinen Formel II
Y-R₃-Si(R₁)ₘ(OR₂)₃₋ₘ (II),
worin R₁ für einen linearen oder verzweigten Alkylrest mit 1 bis 6 C-Atomen, R₂ für einen linearen oder verzweigten Alkylrest mit 1 bis 6 C-Atomen, R₃ für einen linearen oder verzweigten Alkylrest mit 2 bis 24 C-Atomen, einen gegebenenfalls alkylsubstituierten Cycloalkylrest mit 4 bis 24 C-Atomen, einen gegebenenfalls substituierten Aralkylrest mit 6 bis 24 C-Atomen, einen Alkoxyrest mit 2 bis 10 C-Atomen, einen Polyoxyalkylenrest mit 4 bis 44 C-Atomen oder einen gegebenenfalls alkylsubstituierten Arylrest mit 6 bis 24 C-Atomen, m für eine ganze Zahl von 0 bis 2 und Y für mindestens eine funktionelle Gruppe, die mit der funktionellen Gruppe X unter Ausbildung einer kovalenten Bindung reagieren kann, oder Y und R³ zusammen für Wasserstoff steht, unter Ausbildung einer kovalenten Bindung zwischen X und Y oder X und Si, erhältlich ist.

3. Bindemittel nach Anspruch 1, **dadurch gekennzeichnet, daß** das Pfropfpolymere durch Umsetzung der Pfropfgrundlage mit einem Gemisch aus zwei oder mehr olefinisch ungesättigten Monomeren unter radikalischen Bedingungen erhältlich ist, wobei mindestens eines der olefinisch ungesättigten Monomeren eine Alkoxysilylgruppe der allgemeinen Formel I
-Si(R₁)ₘ(OR₂)₃₋ₘ (I),
worin R₁ für einen linearen oder verzweigten Alkylrest mit 1 bis 6 C-Atomen, R₂ für einen linearen oder verzweigten Alkylrest mit 1 bis 6 C-Atomen und m für eine ganze Zahl von 0 bis 2 steht, aufweist.

4. Bindemittel nach Anspruch 1 oder 2, **dadurch gekennzeichnet, dass** das Pfropfpolymere als funktionelle Gruppen X mindestens zwei identische oder unterschiedliche funktionelle Gruppen ausgewählt aus der Gruppe bestehend aus OH-, SH-, NH₂-, NHR₄-, COOH-, Epoxy-, NCO-, Anhydrid- oder Vinylgruppen, worin R₄ für einen linearen oder verzweigten Alkylrest mit 1 bis 24 C-Atomen oder einen Aralkylrest mit 6 bis 24 C-Atomen oder einen Arylrest mit 6 bis 24 C-Atomen oder einen S- oder N-haltigen Heteroarylrest steht, aufweist.

5. Bindemittel nach einem der Ansprüche 1 bis 4, **dadurch gekennzeichnet, daß** das Alkoxysilylgruppen tragende Pfropfpolymere ein Molekulargewicht M_{w} von mindestens 2000 g/mol aufweist.

6. Bindemittelzusammensetzung, mindestens enthaltend
a) ein Alkoxysilylgruppen tragendes Pfropfpolymeres, erhältlich durch
a1) Umsetzung eines mindestens zwei reaktive funktionelle Gruppen X aufweisenden Polymeren mit einer Alkoxysilanverbindung der allgemeinen Formel II
Y-R₃-Si(R₁)ₘ(OR₂)₃₋ₘ (II),
worin R₁ für einen linearen oder verzweigten Alkylrest mit 1 bis 6 C-Atomen, R₂ für einen linearen oder verzweigten Alkylrest mit 1 bis 6 C-Atomen, R₃ für einen linearen oder verzweigten Alkylrest mit 2 bis 24 C-Atomen, einen gegebenenfalls alkylsubstituierten Cycloalkylrest mit 4 bis 24 C-Atomen, einen gegebenenfalls substituierten Aralkylrest mit 6 bis 24 C-Atomen, einen Alkoxyrest mit 2 bis 10C-A,tomen, einen Polyoxyalkylenrest mit 4 bis 44 C-Atomen oder einen gegebenenfalls alkylsubstituierten Arylrest mit 6 bis 24 C-Atomen, m für eine ganze Zahl von 0 bis 2 und Y für mindestens eine funktionelle Gruppe, die mit der funktionellen Gruppe X unter Ausbildung einer kovalenten Bindung reagieren kann oder Y und R³ zusammen für Wasserstoff steht, **dadurch gekennzeichnet, dass** das mindestens zwei funktionelle Gruppen X tragende Polymere ein Polymeres ausgewählt aus der Gruppe bestehend aus Polyestern, Polyethern, Polyetherestern, Polyamiden, Polyurethanen, Polycarbonaten oder Polyvinylestern ist, und
b) mindestens ein weiteres Polymeres, das eine Alkoxysilylgruppe oder keine Alkoxysilylgruppe aufweist und dessen Erweichungspunkt 30 °C bis 250 °C (gemessen mit der Ring-und-Ball-Methode) beträgt, oder ein Gemisch aus zwei oder mehr solcher Polymeren.

7. Bindemittetzusammensetzung nach Anspruch 6, **dadurch gekennzeichnet, daß** das Polymere als funktionelle Gruppen X mindestens zwei identische oder unterschiedliche funktionelle Gruppen ausgewählt aus der Gruppe bestehend aus OH-, SH-, NH₂-, NHP₄-, COOH-, Epoxy-, NCO-, Anhydrid- oder Vinylgruppen, worin R₄ für einen linearen oder verzweigten Alkylrest mit 1 bis 24 C-Atomen oder einen Aralkylrest mit 6 bis 24 C-Atomen oder einen Arylrest mit 6 bis 24 C-Atomen oder einen S- oder N-haltigen Heteroarylrest steht, aufweist.

8. Ein- oder mehrstufiges Verfahren zur Herstellung eines Bindemittels nach einem der Ansprüche 1, 2, 4 oder 5, **dadurch gekennzeichnet, daß** in mindestens einer Stufe ein mindestens zwei reaktive funktionelle Gruppen X aufweisendes Pfropfpolymeres mit einer Alkoxysilanverbindung der allgemeinen Formel II
Y-R₃-Si(R₁)ₘ(OR₂)₃₋ₘ (II),
worin R₁ für einen linearen oder verzweigten Alkylrest mit 1 bis 6 C-Atomen, R₂ für einen linearen oder verzweigten Alkylrest mit 1 bis 6 C-Atomen, R₃ für einen linearen oder verzweigten Alkylrest mit 2 bis 24 C-Atomen, einen gegebenenfalls alkylsubstituierten Cycloalkylrest mit 4 bis 24 C-Atomen, einen gegebenenfalls substituierten Aralkylrest mit 6 bis 24 C-Atomen, einen Alkoxyrest mit 2 bis 10 C-Atomen, einen Polyoxyalkylenrest mit 4 bis 44 C-Atomen oder einen gegebenenfalls alkylsubstituierten Arylrest mit 6 bis 24 C-Atomen, in für eine ganze Zahl von 0 bis 2 und Y für mindestens eine funktionelle Gruppe, die mit der funktionellen Gruppe X unter Ausbildung einer kovalenten Bindung reagieren kann, oder Y und R³ zusammen für Wasserstoff steht, unter Ausbildung einer kovalenten Bindung zwischen X und Y oder X und Si umgesetzt wird,

9. Ein- oder mehrstufiges Verfahren zur Herstellung eines Bindemittels nach Anspruch 3, bei dem in mindestens einer Stufe eine Pfropfgrundlage mit einem Gemisch aus zwei oder mehr olefinisch ungesättigten Monomeren unter radikalischen Bedingungen umgesetzt wird, wobei mindestens eines der olefinisch ungesättigten Monomeren eine Alkoxysilylgruppe der allgemeinen Formel I
-Si(R₁)ₘ(OR₂)₃₋ₘ (I),
worin R₁ für einen linearen oder verzweigten Alkylrest mit 1 bis 6 C-Atomen, R₂ für einen linearen oder verzweigten Alkylrest mit 1 bis 6 C-Atomen und m für eine ganze Zahl von 0 bis 2 steht.

10. Ein- oder mehrstufiges Verfahren zur Herstellung einer Bindemittelzusammensetzung nach Anspruch 6 oder 7, **dadurch gekennzeichnet, daß** es mindestens eine der folgenden Verfahrensstufen ausweist:
(i) ein mindestens zwei reaktive funktionelle Gruppen X aufweisendes Polymeres wird mit einer Alkoxysilanverbindung der allgemeinen Formel II
Y-R₃-Si(R₁)ₘ(OR₂)₃₋ₘ (II),
worin R₁, R₂, R₃, m und Y die oben genannte Bedeutung aufweisen, unter Ausbildung einer kovalenten Bindung zwischen X und Y oder X und Si umgesetzt und anschließend mit einem Polymerisat, erhältlich durch radikalische Polymerisation eines Monomeren mit mindestens einer olefinisch ungesättigten Doppelbindung oder eines Gemischs aus zwei oder mehr solcher Monomeren oder einem Gemisch aus zwei oder mehr solcher Polymerisate vermischt oder
(ii) ein mindestens zwei reaktive funktionelle Gruppen X aufweisendes Polymeres wird mit einem Polymerisat, erhältlich durch radikalische Polymerisation eines Monomeren mit mindestens einer olefinisch ungesättigten Doppelbindung oder eines Gemischs aus zwei oder mehr solcher Monomeren oder einem Gemisch aus zwei oder mehr solcher Polymerisate vermischt und anschließend mit einer Alkoxysilanverbindung der allgemeinen Formel II
Y-R₃-Si(R₁)ₘ(OR₂)₃₋ₘ (II),
worin R₁, R₂, R₃, m und Y die oben genannte Bedeutung aufweisen, unter Ausbildung einer kovalenten Bindung zwischen X und Y oder X und Si umgesetzt oder
(iii) mindestens eine radikalische Polymerisation eines Monomeren mit mindestens einer olefinisch ungesättigten Doppelbindung oder eines Gemischs aus zwei oder mehr solcher Monomeren zu einem Polymerisat wird in Gegenwart mindestens eines zwei reaktive funktionelle Gruppen X aufweisenden Polymeren durchgeführt und das Gemisch aus Polymerisat und Polymerem anschließend mit einer Alkoxysilanverbindung der allgemeinen Formel II
Y-R₃-Si(R₁)ₘ(OR₂)₃₋ₘ (II),
worin R₁, R₂, R₃, m und Y die oben genannte Bedeutung aufweisen, unter Ausbildung einer kovalenten Bindung zwischen X und Y oder X und Si umgesetzt oder
(iv) mindestens eine radikalische Polymerisation eines Monomeren mit mindestens einer olefinisch ungesättigten Doppelbindung oder eines Gemischs aus zwei oder mehr solcher Monomeren zu einem Polymerisat wird in Gegenwart mindestens eines Umsetzungsprodukts eines mindestens zwei reaktive funktionelle Gruppen X aufweisenden Polymeren mit einer Alkoxysilanverbindung der allgemeinen Formel II
Y-R₃-Si(R₁)ₘ(OR₂)₃₋ₘ (II),
worin R₁, R₂, R₃, m und Y die oben genannte Bedeutung aufweisen, unter Ausbildung einer kovalenten Bindung zwischen X und Y oder X und Si, durchgeführt.

11. Schaumerzeugende Zusammensetzung, mindestens enthaltend ein Bindemittel gemäß einem der Ansprüche 1 bis 5 oder eine Bindemittelzusammensetzung gemäß einem der Ansprüche 6 bis 7 oder ein gemäß einem der Ansprüche 8 oder 9 hergestelltes Bindemittel oder eine gemäß Anspruch 10 hergestellte Bindemittelzusammensetzung und ein Treibmittel.

12. Polymerschaum, herstellbar unter Verwendung eines Bindemittels gemäß einem der Ansprüche 1 bis 5 oder einer Bindemittelzusammensetzung nach einem der Ansprüche 6 bis 7 oder einem nach einem der Ansprüche 8 oder 9 herstellbaren Bindemittel oder einer nach Anspruch 10 herstellbaren Bindemittelzusammensetzung oder einer schaumerzeugenden Zusammensetzung nach Anspruch 11.

13. Oberflächenbeschichtungsmittel, insbesondere ein Lack oder ein Klebstoff, herstellbar unter Verwendung eines Bindemittels gemäß einem der Ansprüche 1 bis 5 oder einer Bindemittelzusammensetzung nach einem der Ansprüche 6 bis 7 oder einem nach einem der Ansprüche 8 oder 9 herstellbaren Bindemittel oder einer nach Anspruch 10 herstellbaren Bindemittelzusammensetzung oder einer schaumerzeugenden Zusammensetzung nach Anspruch 11.

14. Verwendung eines Bindemittels gemäß einem der Ansprüche 1 bis 5 oder einer Bindemittelzusammensetzung nach einem der Ansprüche 6 bis 7 oder eines nach einem der Ansprüche 8 oder 9 herstellbaren Bindemittels oder einer nach Anspruch 10 herstellbaren Bindemittelzusammensetzung als Additiv in Oberflächenbeschichnmgsmitteln, Schäumen oder Klebstoffen.

## Claims

1. Binder at least containing a graft polymer bearing at least two alkoxysilyl groups of the general formula I
-Si(R₁)ₘ(OR₂)₃₋ₘ (I)
in which R₁ is a linear or branched alkyl group containing 1 to 6 carbon atoms, R₂ is a linear or branched alkyl group containing 1 to 6 carbon atoms and m is an integer from 0 to 2, with graft branches initiated by radical or ionic polymerization onto a graft base, the graft base used being polyesters, polyethers, polyether esters, polyamides, polyurethanes, polyester urethanes, polyether urethanes, polyetherester urethanes, polyamide urethanes, polyureas, polyamines, polycarbonates, polyvinyl esters or polymers containing a mixture of two or more of the polymer groups mentioned in the polymer backbone and the graft polymer containing at least 0.5% by weight, based on the graft base, of graft branches.

2. Binder according to claim 1, **characterized in that** the graft polymer is obtainable by reaction of a graft polymer containing at least two reactive functional groups X with an alkoxysilane compound of the general formula II
Y-R₃-Si(R₁)m(OR₂)₃₋ₘ (II)
in which R₁ is a linear or branched alkyl group containing 1 to 6 carbon atoms, R₂ is a linear or branched alkyl group containing 1 to 6 carbon atoms, R₃ is a linear or branched alkyl group containing 2 to 24 carbon atoms, an optionally alkyl-substituted cycloalkyl group containing 4 to 24 carbon atoms, an optionally substituted aralkyl group containing 6 to 24 carbon atoms, an alkoxy group containing 2 to 10 carbon atoms, a polyoxyalkylene group containing 4 to 44 carbon atoms or an optionally alkyl-substituted aryl group containing 6 to 24 carbon atoms, m is an integer from 0 to 2 and Y is at least one functional group which can react with the functional group X to form a covalent bond or Y and R³ together represent hydrogen to form a covalent bond between X and Y or X and Si.

3. Binder according to claim 1, **characterized in that** the graft polymer is obtainable by reaction of the graft base with a mixture of two or more olefinically unsaturated monomers under radical conditions, at least one of the olefinically unsaturated monomers containing an alkoxysilyl group of the general formula I
-Si(R₁)ₘ(OR₂)₃₋ₘ (I)
in which R₁ is a linear or branched alkyl group containing 1 to 6 carbon atoms, R₂ is a linear or branched alkyl radical having 1 to 6 carbon atoms and m is an integer from 0 to 2.

4. Binder according to claim 1 or 2, **characterized in that** the graft polymer contains as functional groups X at least two identical or different functional groups selected from the group consisting of OH, SH, NH₂, NHR₄, COOH, epoxy, NCO, anhydride or vinyl groups, where R₄ is a linear or branched alkyl group containing 1 to 24 carbon atoms or an aralkyl group containing 6 to 24 carbon atoms or an aryl group containing 6 to 24 carbon atoms or an S- or N-containing heteroaryl group.

5. Binder according to any of claims 1 to 4, **characterized in that** the graft polymer bearing alkoxysilyl groups has a molecular weight M_{w} of at least 2,000 g/mol.

6. Binder composition at least containing
a) a graft polymer bearing alkoxysilyl groups obtainable by
a1) reaction of a polymer containing at least two reactive functional groups X with an alkoxysilane compound of the general formula II
Y-R₃-Si(R₁)ₘ(OR₂)₃₋ₘ (II)
in which R₁ is a linear or branched alkyl group containing 1 to 6 carbon atoms, R₂ is a linear or branched alkyl group containing 1 to 6 carbon atoms, R₃ is a linear or branched alkyl group containing 2 to 24 carbon atoms, an optionally alkyl-substituted cycloalkyl group containing 4 to 24 carbon atoms, an optionally substituted aralkyl group containing 6 to 24 carbon atoms, an alkoxy group containing 2 to 10 carbon atoms, a polyoxyalkylene group containing 4 to 44 carbon atoms or an optionally alkyl-substituted aryl group containing 6 to 24 carbon atoms, m is an integer from 0 to 2 and Y is at least one functional group which can react with the functional group X to form a covalent bond or Y and R³ together represent hydrogen, **characterized in that** the polymer bearing at least two functional groups X is a polymer selected from the group consisting of polyesters, polyethers, polyether esters, polyamides, polyurethanes, polycarbonates or polyvinyl esters, and
b) at least one other polymer with or without an alkoxysilyl group which has a softening point of 30 to 250°C (as measured by the ring and ball method) or a mixture of two or more such polymers.

7. Binder composition according to claim 6, **characterized in that** the polymer contains as functional groups X at least two identical or different functional groups selected from the group consisting of OH, SH, NH₂, NHR₄, COOH, epoxy, NCO, anhydride or vinyl groups, where R₄ is a linear or branched alkyl group containing 1 to 24 carbon atoms or an aralkyl group containing 6 to 24 carbon atoms or an aryl group containing 6 to 24 carbon atoms or an S- or N-containing heteroaryl group.

8. Single-stage or multistage process for the production of a binder according to any of claims 1, 2, 4 or 5, **characterized in that**, in at least one stage, a graft polymer containing at least two reactive functional groups X is reacted with an alkoxysilane compound of the general formula II
Y-R₃-Si(R₁)ₘ(OR₂)₃₋ₘ (II)
in which R₁ is a linear or branched alkyl group containing 1 to 6 carbon atoms, R₂ is a linear or branched alkyl group containing 1 to 6 carbon atoms, R₃ is a linear or branched alkyl group containing 2 to 24 carbon atoms, an optionally alkyl-substituted cycloalkyl group containing 4 to 24 carbon atoms, an optionally substituted aralkyl group containing 6 to 24 carbon atoms, an alkoxy group containing 2 to 10 carbon atoms, a polyoxyalkylene group containing 4 to 44 carbon atoms or an optionally alkyl-substituted aryl group containing 6 to 24 carbon atoms, m is an integer from 0 to 2 and Y is at least one functional group which can react with the functional group X to form a covalent bond or Y and R³ together represent hydrogen, to form a covalent bond between X and Y or X and Si.

9. Single-stage or multistage process for the production of a binder according to claim 3, in which in at least one stage a graft base is reacted with a mixture of two or more olefinically unsaturated monomers under radical conditions, at least one of the olefinically unsaturated monomers containing an alkoxysilyl group of the general formula I
-Si(R₁)ₘ(OR₂)₃₋ₘ (I)
in which R₁ is a linear or branched alkyl group containing 1 to 6 carbon atoms, R₂ is a linear or branched alkyl group containing 1 to 6 carbon atoms and m is an integer from 0 to 2.

10. Single-stage or multistage process for the production of a binder composition according to claim 6 or 7, **characterized in that** it comprises at least one of the following process stages:
(i) a polymer containing at least two reactive functional groups X is reacted with an alkoxysilane compound of the general formula II
Y-R₃-Si(R₁)ₘ(OR₂)₃₋ₘ (II)
in which R₁, R₂, R₃, m and Y are as defined above, to form a covalent bond between X and Y or X and Si and the reaction product is then mixed with an addition polymer obtainable by radical polymerization of a monomer containing at least one olefinically unsaturated double bond or a mixture of two or more such monomers or a mixture of two or more such addition polymers or
(ii) a polymer containing at least two reactive functional groups X is mixed with an addition polymer obtainable by radical polymerization of a monomer containing at least one olefinically unsaturated double bond or a mixture of two or more such monomers or a mixture of two or more such addition polymers and then with an alkoxysilane compound of the general formula II
Y-R₃-Si(R₁)ₙ(OR₂)₃₋ₘ (II)
in which R₁, R₂, R₃, m and Y are as defined above, to form a covalent bond between X and Y or X and Si or
(iii) at least one radical polymerization of a monomer containing at least one olefinically unsaturated double bond or a mixture of two or more such monomers to form an addition polymer is carried out in the presence of at least one polymer containing two reactive functional groups X and the mixture of polymer and addition polymer is then reacted with an alkoxysilane compound of the general formula II
Y-R₃-Si(R₁)ₘ(OR₂)₃₋ₘ (II)
in which R₁, R₂, R₃, m and Y are as defined above, to form a covalent bond between X and Y or X and Si or
(iv) at least one radical polymerization of a monomer having at least one olefinically unsaturated double bond or a mixture of two or more such monomers to form an addition polymer is carried out in the presence of at least one reaction product of a polymer having at least two reactive functional groups X with an alkoxysilane compound of the general formula II
Y-R₃-Si-(R₁)ₘ(OR₂)₃₋ₘ (II)
in which R₁, R₂, R₃, m and Y are as defined above, to form a covalent bond between X and Y or X and Si.

11. Foam-generating composition at least containing a binder according to any of claims 1 to 5 or a binder composition according to any of claims 6 to 7 or a binder obtained according to either of claims 8 and 9 or a binder composition obtained according to claim 10 and a propellant.

12. Polymer foam obtainable using a binder according to any of claims 1 to 5 or a binder composition according to any of claims 6 to 7 or a binder obtainable according to either of claims 8 and 9 or a binder composition obtainable according to claim 10 or a foam-generating composition according to claim 11.

13. Surface coating composition, more particularly a paint or an adhesive, obtainable using a binder according to any of claims 1 to 5 or a binder composition according to any of claims 6 to 7 or a binder obtainable according to either of claims 8 and 9 or a binder composition obtainable according to claim 10 or a foam-generating composition according to claim 11.

14. Use of a binder according to any of claims 1 to 5 or a binder composition according to any of claims 6 to 7 or a binder obtainable according to either of claims 8 and 9 or a binder composition obtainable according to claim 10 as an additive in surface coating compositions, foams or adhesives.

## Revendications

1. Liant, contenant au moins un polymère greffé portant au moins deux groupes alcoxysilyle de formule générale
-Si (R₁)ₘ(OR₂)₃₋ₘ (I),
où R₁ représente un radical alkyle linéaire ou ramifié comprenant 1 à 6 atomes de carbone, R₂ représente un radical alkyle linéaire ou ramifié comprenant 1 à 6 atomes de carbone et m représente un nombre entier de 0 à 2, avec des branches ou des ramifications greffées initiées sur une base de greffage par polymérisation radicalaire ou ionique, où on utilise comme base de greffage un polyester, un polyéther, un polyétherester, un polyamide, un polyuréthane, un polyesteruréthane, un polyétheruréthane, un polyétheresteruréthane, un polyamiduréthane, une polyurée, une polyamine, un polycarbonate, un poly(ester de vinyle) ou des polymères qui présentent, dans l'épine dorsale du polymère, un mélange de deux des groupes polymères mentionnés ou plus et le polymère greffé présente au moins 0,5% en poids, par rapport à la base de greffage, de branches ou de ramifications greffées.

2. Liant selon la revendication 1, **caractérisé en ce** le polymère greffé peut être obtenu par transformation d'un polymère greffé présentant au moins deux groupes fonctionnels réactifs X avec un composé alcoxysilane de formule générale II
Y-R₃-Si(R₁)ₘ(OR₂)₃₋ₘ (II),
où R₁ représente un radical alkyle linéaire ou ramifié comprenant 1 à 6 atomes de carbone, R₂ représente un radical alkyle linéaire ou ramifié comprenant 1 à 6 atomes de carbone, R₃ représente un radical alkyle linéaire ou ramifié comprenant 2 à 24 atomes de carbone, un radical cycloalkyle, le cas échéant substitué par alkyle comprenant 4 à 24 atomes de carbone, un radical aralkyle le cas échéant substitué comprenant 6 à 24 atomes de carbone, un radical alcoxy comprenant 2 à 10 atomes de carbone, un radical polyoxyalkylène comprenant 4 à 44 atomes de carbone ou un radical aryle le cas échéant substitué par alkyle comprenant 6 à 24 atomes de carbone, m représente un nombre entier de 0 à 2, et Y représente au moins un groupe fonctionnel, qui peut réagir avec le groupe fonctionnel X en formant une liaison covalente, ou Y et R³ représentent ensemble hydrogène, avec formation d'une liaison covalente entre X et Y ou X et Si.

3. Liant selon la revendication 1, **caractérisé en ce que** le polymère greffé peut être obtenu par transformation de la base de greffage avec un mélange de deux monomères oléfiniquement insaturés ou plus dans des conditions radicalaires, au moins un des monomères oléfiniquement insaturés présentant un groupe alcoxysilyle de formule générale I
-Si (R₁)ₘ(OR₂)₃₋ₘ (I)
où R₁ représente un radical alkyle linéaire ou ramifié comprenant 1 à 6 atomes de carbone, R₂ représente un radical alkyle linéaire ou ramifié comprenant 1 à 6 atomes de carbone et m représente un nombre entier de 0 à 2.

4. Liant selon la revendication 1 ou 2, **caractérisé en ce que** le polymère greffé présente comme groupes fonctionnels X au moins deux groupes fonctionnels identiques ou différents choisis dans le groupe constitué par les groupes OH, SH, NH₂, NHR₄, COOH, époxy, NCO, anhydride ou vinyle, où R₄ représente un radical alkyle linéaire ou ramifié comprenant 1 à 24 atomes de carbone ou un radical aralkyle comprenant 6 à 24 atomes de carbone ou un radical aryle comprenant 6 à 24 atomes de carbone ou un radical hétéroaryle contenant S ou N.

5. Liant selon l'une quelconque des revendications 1 à 4, **caractérisé en ce que** le polymère greffé portant des groupes alcoxysilyle présente un poids moléculaire M_{w} d'au moins 2000 g/mole.

6. Composition de liant, contenant au moins a) un polymère greffé portant des groupes alcoxysilyle, pouvant être obtenu par
a1) transformation d'un polymère présentant au moins deux groupes fonctionnels réactifs X avec un composé alcoxysilane de formule générale **II**
Y- R₃-Si(R₁)ₘ(OR₂)₃₋ₘ (II),
où R₁ représente un radical alkyle linéaire ou ramifié comprenant 1 à 6 atomes de carbone, R₂ représente un radical alkyle linéaire ou ramifié comprenant 1 à 6 atomes de carbone, R₃ représente un radical alkyle linéaire ou ramifié comprenant 2 à 24 atomes de carbone, un radical cycloalkyle le cas échéant substitué par alkyle comprenant 4 à 24 atomes de carbone, un radical aralkyle le cas échéant substitué comprenant 6 à 24 atomes de carbone, un radical alcoxy comprenant 2 à 10 atomes de carbone, un radical polyoxyalkylène comprenant 4 à 44 atomes de carbone ou un radical aryle le cas échéant substitué par alkyle comprenant 6 à 24 atomes de carbone, m représente un nombre entier de 0 à 2, et Y représente au moins un groupe fonctionnel, qui peut réagir avec le groupe fonctionnel X en formant une liaison covalente, ou Y et R₃ représentent ensemble hydrogène, **caractérisée**
**en ce que** le polymère portant au moins deux groupes fonctionnels X est un polymère choisi dans le groupe constitué par les polyesters, les polyéthers, les polyétheresters, les polyamides, les polyuréthanes, les polycarbonates ou les poly(esters de vinyle), et
b) au moins un autre polymère, qui présente un groupe alcoxysilyle ou qui ne présente pas de groupe alcoxysilyle et dont le point de ramollissement est de 30°C à 250°C (mesuré par le procédé anneau-et-bille) ou un mélange de deux de ces polymères ou plus.

7. Composition de liant selon la revendication 6, **caractérisée en ce que** le polymère présente comme groupes fonctionnels X au moins deux groupes fonctionnels identiques ou différents choisis dans le groupe constitué par les groupes OH, SH, NH₂, NHR₄, COOH, époxy, NCO, anhydride ou vinyle, où R₄ représente un radical alkyle linéaire ou ramifié comprenant 1 à 24 atomes de carbone ou un radical aralkyle comprenant 6 à 24 atomes de carbone ou un radical aryle comprenant 6 à 24 atomes de carbone ou un radical hétéroaryle contenant S ou N.

8. Procédé à une ou plusieurs étapes pour la préparation d'un liant selon l'une quelconque des revendications 1, 2, 4 ou 5, **caractérisé en ce qu'**on transforme, dans au moins une étape, un polymère greffé présentant au moins deux groupes fonctionnels réactifs X avec un composé alcoxysilane de formule générale II
Y-R₃-Si(R₁)ₘ(OR₂)₃₋ₘ (II),
où R₁ représente un radical alkyle linéaire ou ramifié comprenant 1 à 6 atomes de carbone, R₂ représente un radical alkyle linéaire ou ramifié comprenant 1 à 6 atomes de carbone et R₃ représente un radical alkyle linéaire ou ramifié comprenant 2 à 24 atomes de carbone, un radical cycloalkyle le cas échéant substitué par alkyle comprenant 4 à 24 atomes de carbone, un radical aralkyle le cas échéant substitué comprenant 6 à 24 atomes de carbone, un radical alcoxy comprenant 2 à 10 atomes de carbone, un radical polyoxyalkylène comprenant 4 à 44 atomes de carbone ou un radical aryle le cas échéant substitué par alkyle comprenant 6 à 24 atomes de carbone, m représente un nombre entier de 0 à 2, et Y représente au moins un groupe fonctionnel, qui peut réagir avec le groupe fonctionnel X avec formation d'une liaison covalente, ou Y et R₃ représentent ensemble hydrogène avec formation d'une liaison covalente entre X et Y ou X et Si.

9. Procédé à une ou plusieurs étapes pour la préparation d'un liant selon la revendication 3, dans lequel, dans au moins une étape, une base de greffage est transformée avec un mélange de deux monomères oléfiniquement insaturés ou plus dans des conditions radicalaires, au moins un des monomères oléfiniquement insaturés présentant un groupe alcoxysilyle de formule générale I
-Si(R₁)ₘ(OR₂)₃₋ₘ (I),
où R₁ représente un radical alkyle linéaire ou ramifié comprenant 1 à 6 atomes de carbone, R₂ représente un radical alkyle linéaire ou ramifié comprenant 1 à 6 atomes de carbone et m représente un nombre entier de 0 à 2.

10. Procédé à une ou plusieurs étapes pour la préparation d'une composition de liant selon la revendication 6 ou 7, **caractérisé en ce qu'**il présente au moins une des étapes de procédé suivantes :
(i) transformation d'un polymère présentant au moins deux groupes fonctionnels réactifs X avec un composé alcoxysilane de formule générale II
Y-R₃-Si(R₁)ₘ(OR₂)₃₋ₘ (II),
où R₁, R₂, R₃, m et Y présentent la signification susmentionnée, avec formation d'une liaison covalente entre X et Y ou X et Si puis mélange avec un polymérisat, pouvant être obtenu par une polymérisation radicalaire d'un monomère comprenant au moins une double liaison oléfiniquement insaturée ou d'un mélange de deux de ces monomères ou plus ou avec un mélange de deux de ces polymérisats ou plus ou
(ii) mélange d'un polymère présentant au moins deux groupes fonctionnels réactifs X avec un polymérisat pouvant être obtenu par polymérisation radicalaire d'un monomère présentant au moins une double liaison oléfiniquement insaturée ou d'un mélange de deux de ces monomères ou plus ou avec un mélange de deux de ces polymérisats ou plus, puis on transforme avec un composé alcoxysilane de formule générale II
Y-R₃-Si(R₁)ₘ(OR₂)₃₋ₘ (II)
où R₁, R₂, R₃, m et Y présentent la signification susmentionnée, avec formation d'une liaison covalente entre X et Y ou X et Si ou
(iii) réalisation d'au moins une polymérisation radicalaire d'un monomère présentant au moins une double liaison oléfiniquement insaturée ou d'un mélange de deux de ces monomères ou plus en un polymérisat en présence d'au moins un polymère présentant au moins deux groupes fonctionnels réactifs X et ensuite transformation du mélange du polymérisat et du polymère avec un composé alcoxysilane de formule générale II
Y-R₃-Si(R₁)ₘ(OR₂)₃₋ₘ (II),
où R₁, R₂, R₃, m et Y présentent la signification susmentionnée, avec formation d'une liaison covalente entre X et Y ou X et Si ou
(iv) réalisation d'au moins une polymérisation radicalaire d'un monomère présentant au moins une double liaison oléfiniquement insaturée ou d'un mélange de deux de ces monomères ou plus en un polymérisat en présence d'au moins un produit de transformation d'un polymère présentant au moins deux groupes fonctionnels réactifs X avec un composé alcoxysilane de formule générale II
Y-R₃-Si(R₁)ₘ(OR₂)₃₋ₘ (II),
où R₁, R₂, R₃, m et Y présentent la signification susmentionnée, avec formation d'une liaison covalente entre X et Y ou X et Si.

11. Composition produisant de la mousse, contenant au moins un liant selon l'une quelconque des revendications 1 à 5 ou une composition de liant selon l'une quelconque des revendications 6 à 7 ou un liant préparé selon l'une quelconque des revendications 8 ou 9 ou une composition de liant préparée selon la revendication 10 et un agent moussant.

12. Mousse polymère pouvant être préparée avec utilisation d'un liant selon l'une quelconque des revendications 1 à 5 ou d'une composition de liant selon l'une quelconque des revendications 6 à 7 ou d'un liant pouvant être préparé selon l'une quelconque des revendications 8 ou 9 ou d'une composition de liant pouvant être préparée selon la revendication 10 ou d'une composition produisant de la mousse selon la revendication 11.

13. Agent de revêtement de surface, en particulier une laque ou un adhésif, pouvant être préparé avec utilisation d'un liant selon l'une quelconque des revendications 1 à 5 ou d'une composition de liant selon l'une quelconque des revendications 6 à 7 ou d'un liant pouvant être préparé selon l'une quelconque des revendications 8 ou 9 ou d'une composition de liant pouvant être préparée selon la revendication 10 ou d'une composition produisant de la mousse selon la revendication 11.

14. Utilisation d'un liant selon l'une quelconque des revendications 1 à 5 ou d'une composition de liant selon l'une quelconque des revendications 6 à 7 ou d'un liant pouvant être préparé selon l'une quelconque des revendications 8 ou 9 ou d'une composition de liant pouvant être préparée selon la revendication 10 comme additif dans des agents de revêtement de surface, des mousses ou des adhésifs.
